(19) Europäisches Patentamt / European Patent Office / Office européen des brevets

(11) **EP 1 786 877 B1**

(12) **EUROPEAN PATENT SPECIFICATION**

(45) Date of publication and mention of the grant of the patent:
**13.04.2016  Bulletin 2016/15**

(21) Application number: **05857528.3**

(22) Date of filing: **14.07.2005**

(51) Int Cl.:
***C09D 11/00*** ***(2014.01)***

(86) International application number:
**PCT/US2005/025074**

(87) International publication number:
**WO 2006/085992 (17.08.2006 Gazette 2006/33)**

(54) **RADIATION CURABLE INKJET INKS, METHOD OF MANUFACTURE, AND METHODS OF USE THEREOF**

STRAHLUNGSHÄRTBARE TINTENSTRAHLDRUCKTINTEN, DEREN HERSTELLUNG UND VERWENDUNG

ENCRES D'IMPRIMANTE A JET D'ENCRE A SECHAGE PAR RAYONNEMENT, LEUR PROCEDE ET FABRICATION, ET LEURS PROCEDES D'UTILISATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.07.2004  US 588921 P**
**04.10.2004  US 615756 P**
**02.06.2005  US 686768 P**

(43) Date of publication of application:
**23.05.2007  Bulletin 2007/21**

(73) Proprietor: **Collins Ink Corporation**
**Cincinatti, OH 45216 (US)**

(72) Inventors:
• **EDISON, Sara**
**Newport, KY 41071 (US)**
• **ELLISON, Matthew, M.**
**Mason, OH 45040 (US)**
• **FECH, John**
**Alexandria, KY 41001 (US)**
• **HUO, Xin**
**Dover, Delaware 19901 (US)**
• **MADHUSOODHANAN, Sudhakar**
**Cincinnati, OH 45236 (US)**
• **NAGVEKAR, Devdatt, S**
**Hamilton, OH 45011 (US)**
• **SNOWWHITE, Paul, E.**
**Cincinnati, OH 45215 (US)**
• **SUNG, Stephen**
**Hamilton, OH 45011 (US)**
• **WEBB, Kim, Lynn**
**Fairfield, OH 45014 (US)**

(74) Representative: **Richards, John et al**
**Ladas & Parry LLP**
**Temple Chambers**
**3-7 Temple Avenue**
**London EC4Y 0DA (GB)**

(56) References cited:
**US-A1- 2002 149 659     US-B1- 6 550 905**

**Description**

BACKGROUND

This disclosure relates to radiation curable inks for inkjet printing, methods of manufacture, and methods of use thereof.

Aqueous or organic solvent-based radiation curable inkjet inks curable by radiation, particularly ultraviolet (UV) light, are known. Such inks are difficult to formulate because the inks must satisfy numerous criteria affecting performance and stability. For example, the inks must possess low viscosity, an appropriate level of surface tension, low volatility, low smear, high image quality (especially at high print speeds), and adhesion to a variety of substrate materials. Stability of the inks is also important, including storage stability, stability at high shear rates, stability at high temperatures, and stability at the extreme conditions inside a print head, e.g. a piezoelectric head. Also desired is the elimination of volatile solvents from the inks. Current commercially available UV curable inkjet inks are limited in one or more of these areas, in particular by either slow printing speeds or low resolution. For instance, certain commercially available inks can produce good resolution at lower print speeds, (less than about 8 kilohertz (kHz)), but are usable at higher speeds only at the expense of good print resolution.

Radiation curable inkjet inks using pigments as colorants are particularly difficult to formulate, as pigments have significant drawbacks. Pigment particles readily settle and agglomerate, even when initially in the form of a homogenous dispersion. Settled or agglomerated pigment particles must be re-dispersed, for example by re-circulation or agitation, to reform a homogenous dispersion before an ink can be jetted. Such re-dispersed ink may not have the same (or even similar) properties or distribution characteristics as freshly prepared inks.

There remains a continuing need in the art for improved radiation curable inkjet ink formulations, particularly those using pigments as colorants.

SUMMARY

In one embodiment, a radiation curable inkjet ink comprises a radiation curable composition comprising about 0.1 to about 15 wt.% of an ethylenically unsaturated monofunctional monomer, about 30 to about 80 wt.% of an ethylenically unsaturated difunctional monomer, 0 to about 15 wt.% of an ethylenically unsaturated polyfunctional monomer, and 0 to about 15 wt.% of an ethylenically unsaturated urethane oligomer; a pigment dispersion; and a polymerization initiator; wherein the ink when containing ethylenically unsaturated urethane oligomer has an activation energy of fluidization of about 15 to 26 kJ/mol and in the absence of ethylenically unsaturated urethane oligomer has an activation energy of fluidization of about 18 to about 40 kJ/mol at a shear rate of about 1 to about 170,000 sec$^{-1}$ and a temperature of about 25 to about 50°C.

In another embodiment, a radiation curable inkjet ink comprises a radiation curable composition; a pigment dispersion; and a polymerization initiator, wherein the ink is a cyan ink which, when used in a impulse inkjet print head at a frequency of about 16 kHz, has an operating window of reliable printing at a voltage of about 80 to about 120 volts at a temperature of about 30 °C to about 70 °C, wherein less than or equal to 7% of the total nozzles fail in the printhead after three minutes of continuous jetting.

In another embodiment, a radiation curable inkjet ink comprises a radiation curable composition; a pigment dispersion; and a polymerization initiator, wherein the ink is a magenta ink which, when used in a impulse inkjet print head at a frequency of about 16 kHz, has an operating window of reliable printing at a voltage of about 80 to about 120 volts at a temperature of about 30 °C to about 70 °C, wherein less than or equal to 7% of the total nozzles fail in the printhead after three minutes of continuous jetting.

In yet another embodiment, a radiation curable inkjet ink comprises a radiation curable composition; a pigment dispersion; and a polymerization initiator, wherein the ink is a black ink which, when used in a impulse inkjet print head at a frequency of about 16 kHz, has an operating window of reliable printing at a voltage of about 80 to about 120 volts at a temperature of about 30 °C to about 70 °C, wherein less than or equal to 7% of the total nozzles fail in the printhead after three minutes of continuous jetting.

In still another embodiment a radiation curable inkjet ink comprises a radiation curable composition; a pigment dispersion; and a polymerization initiator, wherein the ink is a yellow ink which, when used in a impulse inkjet print head at a frequency of about 16 kHz, has an operating window of reliable printing at a voltage of about 80 to about 120 volts at a temperature of about 30 °C to about 70 °C, wherein less than or equal to 7% of the total nozzles fail in the printhead after three minutes of continuous jetting.

In one embodiment, a radiation curable inkjet ink comprises a radiation curable composition; a pigment dispersion; and a polymerization initiator, wherein the ink is a yellow ink which, when used in a impulse inkjet print head at a frequency of about 32 kHz, has an operating window of reliable printing at a voltage of about 80 to about 110 volts, and a temperature of about 30 °C to about 50 °C where less than or equal to 7% of the total nozzles fail in the printhead after three minutes of continuous jetting.

In another embodiment, a radiation curable inkjet ink comprises a radiation curable composition; a pigment dispersion; and a polymerization initiator, wherein the ink is a cyan ink which, when used in a impulse inkjet print head at a frequency of about 32 kHz, has an operating window of reliable printing at a voltage of about 80 to about 100 volts at a temperature of about 30 °C to about 50 °C wherein less than or equal to 7% of the total nozzles fail in the printhead after three minutes of continuous jetting.

In another embodiment, a radiation curable inkjet ink comprises a radiation curable composition; a pigment dispersion; and a polymerization initiator, wherein the ink is a magenta ink which when used in a impulse inkjet print head at a frequency of about 32 kHz, has an operating window of reliable printing at a voltage of about 80 to about 110 volts at a temperature of about 30 °C to about 50 °C wherein less than or equal to 7% of the total nozzles fail in the printhead after three minutes of continuous jetting.

In yet another embodiment, a radiation curable inkjet ink comprises a radiation curable composition; a pigment dispersion; and a polymerization initiator, wherein the ink is a black ink which when used in a impulse inkjet print head at a frequency of about 32 kHz, has an operating window of reliable printing at a voltage of about 80 to about 110 volts at a temperature of about 30 °C to about 50 °C, wherein less than or equal to 7% of the total nozzles fail in the printhead after three minutes of continuous jetting.

In one embodiment, a radiation curable white inkjet ink comprises radiation curable materials; pigment dispersion comprising of inorganic nanoparticles; and polymerization initiator; wherein the pigment is present in about 4 to about 65 wt% based on the total weight of the ink; and wherein the pigment present in the ink does not settle more than about 5 percent after 20 days at 25°C as determined by the change in backscattering of a sample of ink using a Turbiscan LabExpert Sedimentometer using a wavelength of 880 nm over a range of backscattering foci from about 5 mm to about 45 mm.

In yet another embodiment, a radiation curable white inkjet ink comprises radiation curable materials; pigment dispersion comprising inorganic nanoparticles; and polymerization initiator; wherein the ink exhibits opacity of about 15 to about 80% and the ink exhibits a degree of cure of at least about 66% measured for through cure at about 150 mJ/cm$^2$ using an iron doped electrode bulb.

In still yet another embodiment, a radiation curable white inkjet ink comprises radiation curable materials; pigment dispersion comprising inorganic nanoparticles; and polymerization initiator, wherein the ink exhibits an activation energy of fluidization of about 7-35 kJ/mol at a shear rate of about 1 to about 170,000 sec$^{-1}$ and a temperature of about 25°C to about 50°C.

In another embodiment, a radiation curable white inkjet ink, wherein the ink when used in a impulse inkjet print head at a frequency of about 16 kHz, has an operating window of reliable printing at a voltage of about 80 to about 130 volts and a temperature of about 30 °C to about 50 °C, and about 80 to about 120 volts at a temperature of about 60 °C to about 70 °C where less than or equal to 7% of the total nozzles fail in the printhead after three minutes of continuous jetting.

In one embodiment, a radiation curable white inkjet ink, wherein the ink when used in a impulse inkjet print head at a frequency of about 32 kHz, has an operating window of reliable printing at a voltage of about 100 to about 120 volts and a temperature of about 30 °C, at a voltage of about 80 to about 120 volts and a temperature of about 40 °C, at a voltage of about 80 to about 110 volts and a temperature of about 50 °C, at a voltage of about 90 to about 100 volts at a temperature of about 60 °C, and at a voltage of about 90 to about 110 volts and a temperature of about 70 °C where less than or equal to 7% of the total nozzles fail in the printhead after three minutes of continuous jetting.

Also disclosed herein are articles prepared from the inkjet inks, a method of printing, a method of preparing a radiation curable inkjet ink, and a pigment dispersion.

BRIEF DESCRIPTION OF DRAWINGS

Figure 1 illustrates an operating window for a radiation curable cyan ink using a piezoelectric print head;
Figure 2 illustrates an operating window for a radiation curable yellow ink using a piezoelectric print head;
Figure 3 illustrates an operating window for a radiation curable black ink using a piezoelectric print head;
Figure 4 shows images of ink droplet break up as radiation curable cyan ink drops are ejected from the faceplate of a piezoelectric print head;
Figure 5 is a temperature-viscosity curve of ink Formulation 1;
Figure 6 illustrates temperature-viscosity curves of cyan inks;
Figure 7 illustrates Arrhenius curves of cyan inks;
Figure 8 illustrates an inkjet ink surface without urethane oligomer at 200x magnification;
Figure 9 illustrates an inkjet ink surface without urethane oligomer at 400x magnification;

Figure 10 illustrates an inkjet ink surface with 5 wt% urethane oligomer at 200x magnification;
Figure 11 illustrates an inkjet ink surface with 5 wt% urethane oligomer at 400x magnification;
Figure 12 illustrates an inkjet ink surface with 7.5 wt% urethane oligomer at 200x magnification; and
Figure 13 illustrates an inkjet ink surface with 7.5 wt% urethane oligomer at 400x magnification.

DETAILED DESCRIPTION

Disclosed herein are non-aqueous, radiation curable inkjet inks that meet the desired properties of stability at high shear rate (good rheological stability), stability at high temperatures, and/or stability in inkjet print heads, especially impulse inkjet print heads. These inks can exhibit a wide process window at or above 10 kHz print speeds using an impulse inkjet print head. A print speed at this level allows for the radiation curable ink to be printed at speeds similar to traditional inkjet inks. The radiation curable inks disclosed herein are curable with UV light. In a particularly advantageous feature, using the guidance provided herein, radiation curable inkjet inks can be formulated that have good jet performance, including good jet break up and a broad operating window under rapid printing conditions, without loss of printing resolution and print quality. The ink also desirably has good physical and chemical stability at both ambient temperatures and print head operating temperatures, as well as good aging stability.

Impulse inkjet printheads, also known as "drop on demand," as used herein refers to four types of printheads: airbrush, electrostatic, piezoelectric, and thermal. Piezoelectric printheads are available in two classes: binary (on or off) and grayscale (building up a drop's size by adding multiple amounts of smaller drops to it). Impulse inkjet printheads are to be distinguished from continuous inkjet printing printheads.

The radiation curable inks comprise a radiation curable composition. Such compositions contain, as the predominant component(s), at least one radiation curable material containing a radiation curable functional group, for example an ethylenically unsaturated group, an epoxide, and the like. Suitable ethylenically unsaturated groups include acrylate, methacrylate, acrylamide, methacrylamide, vinyl, allyl, or other ethylenically unsaturated functional groups. As used herein, "(meth)acrylate" is inclusive of both acrylate and methacrylate functional groups. The materials can be in the form of monomers, oligomers, and/or polymers, or mixtures thereof. As used herein, the term "monomer" is a compound whose molecules can join together to form oligomers or polymers. "Oligomers" as used herein is a polymer intermediate containing relatively few structural units (e.g. 2, 3, or 4 repeat units). Ethylenically unsaturated alkoxylated compounds are excluded from the definition of an oligomer and are herein considered monomers unless indicated otherwise. For example, propoxylated neopentyl glycol diacrylate is considered a difunctional monomer. The materials can also be monofunctional, difunctional, or polyfunctional, for example tri-, tetra-, and higher functional materials. As used herein, mono-, di-, tri-, and tetrafunctional materials refers to compounds having one, two, three, and four radiation curable functional groups, specifically ethylenically unsaturated groups per molecule, respectively. With certain oligomeric material, the label of mono-, di-, or polyfunctional can be based on an average functionality rather than an absolute. Suitable radiation curable materials are generally liquids of low volatility, both at ambient temperature and at temperatures employed in the print heads.

Many of the desirable features of an inkjet ink can be met by use of ethylenically unsaturated materials, particularly materials containing (meth)acrylate groups. Appropriate selection of a monofunctional ethylenically unsaturated compound can provide both low volatility and the desired viscosity of the resulting ink. Monofunctional ethylenically unsaturated monomers for use in the radiation curable inks include, for example, (meth)acrylates of straight chain, branched chain, or cyclic alkyl alcohols, including polyether alcohols. Specific examples include acrylates of alcohols having more than four carbon atoms, for example lauryl acrylate and stearyl acrylate; (meth)acrylates of polyether alcohols, such as 2-(2-ethoxyethoxy)ethyl acrylate; (meth)acrylates, of cyclic alcohols, optionally containing an aliphatic linking group between the (meth)acrylate and the cyclic group, such as tetrahydrofuran acrylate, oxetane acrylate, isobornyl acrylate, cyclopentadiene acrylate, and the like. Combinations comprising at least one of the foregoing can be used.

When used, the total amount of monofunctional monomers can be 0 to about 20 weight percent (wt.%), specifically about 1 to about 15 wt.%, more specifically about 2 to about 10 wt.%, and yet more specifically about 3 to about 8 wt.% based on the total weight of the inkjet ink.

Di- and polyfunctional compounds are used and selected so as to provide the desired viscosity and crosslink density. Suitable difunctional ethylenically unsaturated monomers include, for example, di(meth)acrylates of diols and polyetherdiols, including glycols and polyglycols, such as propylene glycol and polypropylene glycols. Repeating units of glycols including di-, tri- and higher glycols can be used. Other suitable di(meth)acrylates include the di(meth)acrylate of 1,4-butanediol (e.g., SR 213), 1,3-butanediol, neopentylglycol, propoxylated neopentyl glycol (e.g., SR 9003, a diacrylate of a propoxylated neopentyl glycol), diethylene glycol (e.g., SR 230), hexanediol, dipropylene glycol (e.g., SR 508), tripropylene glycol (e.g., SR 306), triethylene glycol (e.g., SR 272), polyethylene glycol (e.g., SR 259), alkoxylated hexane diols (e.g., CD 560 and CD 564), neopentylglycol (e.g., SR 247), tetraethylene glycol (SR268) and the like, and di(meth)acrylates available under the trade name SR 9209 (an alkoxylated aliphatic diacrylate). Divinyl and/or diallyl compounds may also be used. Combinations comprising at least one of the foregoing difunctional compounds can be used.

The total amount of difunctional monomer can be about 30 to about 80 wt.%, specifically about 35 to about 70 wt.%, more specifically about 45 to about 65 wt.%, and yet more specifically about 50 to about 60 wt.% based on the total weight of the inkjet ink.

Exemplary suitable trifunctional ethylenically unsaturated monomers include (meth)acrylate esters of triols, for example glycerol, trimethylol propane, pentaerythritol, neopentyl alcohol, and the like. Alkoxylated (meth)acrylates can also be used, for example propoxylated and ethoxylated (meth)acrylates such as ethoxylated trimethylol propane tri(meth)acrylates, propoxylated glyceryl tri(meth)acrylates, propoxylated pentaerythritol tri(meth)acrylates, tris(2-hydroxyethyl) isocyanurate tri(meth)acrylate, and the trifunctional acrylate ester available from Sartomer under the trade name SR 9012. Combinations comprising at least one of the foregoing trifunctional compounds can be used.

When used, the total amount of trifunctional monomer can be 0 to about 10 wt.%, specifically about 1 to about 8 wt.%, more specifically about 2 to about 7 wt.%, and yet more specifically about 3 to about 5 wt.% based on the total weight of the inkjet ink. In one embodiment, the ink is substantially free of trifunctional monomer, specifically comprising no trifunctional monomer.

Suitable tetrafunctional ethylenically unsaturated monomers include, for example alkoxylated (meth)acrylates obtained from tetraols, such as ethoxylated pentaerythritol tetra(meth)acrylates, and the like.

When used, the total amount of tetrafunctional monomer can be 0 to about 15 wt.%, specifically about 2 to about 12 wt.%, more specifically about 3 to about 9 wt.%, and yet more specifically about 4 to about 6 wt.% based on the total weight of the inkjet ink.

When used, the total amount of polyfunctional monomer can be 0 to about 15 wt.%, specifically about 2 to about 12 wt.%, more specifically about 3 to about 9 wt.%, and yet more specifically about 4 to about 6 wt.% based on the total weight of the inkjet ink.

The radiation curable composition is the predominant component of the radiation curable inkjet ink, being present in an amount of about 55 to about 90 wt.%, specifically about 60 to about 85 wt.%, and yet more specifically about 65 to about 80 wt.%, based on the total weight of the inkjet ink.

The types and relative amounts of the radiation curable materials are preferably selected so as to provide the desired viscosity, adhesion to the substrate, and wettability of the substrate to be printed. The materials may further be selected so as to provide other desired properties to the inkjet ink, for example stability, effective pigment dispersion, pigment wetting, miscibility with one another, good wettability for the print head, jettability, adhesion, fast cure speed, and the like. For example, acrylate compounds tend to react faster than methacrylate compounds. The inkjet ink materials are further selected so as to provide adequate stability, specifically thermal, hydrolytic, and rheological stability during inkjetting, and storage stability. The materials can also be selected so as to provide a cured material that is lightfast and resistant to yellowing when aged.

In particular, the materials are selected so as to provide a viscosity suitable for inkjetting after the radiation curable composition has been formulated with the pigment dispersion, initiator, and any other additives. The viscosity of the ink has an effect on the priming of the inkjet print head, as well as jetting reliability. In one embodiment, the viscosity of the radiation curable inkjet ink is less than 60 centipoise, specifically less than 50 centipoise, and more specifically less than 40 centipoise. Inkjet inks suitable for use with current impulse printheads have a viscosity greater than about 1 centipoise.

The viscosity of the radiation curable inkjet inks can be adjusted by use of an appropriate amount of a low viscosity monomer. The low-viscosity monomer may have a viscosity of about 1 to about 20 centipoise (cP), specifically about 2 to about 17 cP, more specifically about 5 to about 15 cP, measured at a temperature of 25°C.

A particular group of low viscosity monomers include hetero difunctional monomers which contain an aliphatic alkyleneoxide moiety and two ethylenically unsaturated groups, specifically a combination of a (meth)acrylate and a vinylether group. The hetero difunctional monomers are especially useful for decreasing the viscosity of curable compositions that contain high-viscosity materials such as urethane acrylates. Exemplary hetero difunctional monomers include but are not limited to 2-(2-vinylethoxy)ethyl (meth)acrylate, 2-(2-vinylethoxy)-2-propyl (meth)acrylate, 2-(2-vinylethoxy)-3-propyl (meth)acrylate, 2-(2-vinylethoxy)-2-butyl (meth)acrylate, 2-(2-vinylethoxy)-4-butyl (meth)acrylate, 2-(2-allylethoxy) ethyl (meth)acrylate, 2-(2-allylethoxy)-2-propyl (meth)acrylate, 2-(2-allylethoxy)-3-propyl (meth)acrylate, 2-(2-allylethoxy)-2-butyl (meth)acrylate, 2-(2-allylethoxy)-4-butyl (meth)acrylate, 2-(2-vinylpropoxy)ethyl (meth)acrylate, 2-(2-vinylpropoxy)2-propyl (meth)acrylate, 2-(2-vinylpropoxy)-3-propyl (meth)acrylate, 2-(3-vinylpropoxy) ethyl (meth)acrylate, 2-(3-vinylpropoxy)-2-propyl (meth)acrylate, 2-(3-vinylpropoxy)-3-propyl (meth)acrylate, and combinations comprising at least one of the foregoing. The compound 2-(2-vinylethoxy) ethyl acrylate (VEEA) is commercially available from Nippon Shokubai Co., Inc.

Where used, the hetero difunctional monomer can be present in an amount of about 1 to about 80 wt.%, specifically about 5 to about 75 wt.%, and more specifically about 10 to about 70 wt.% of the weight of the radiation curable inkjet ink.

The radiation curable composition can further comprise a curable, ethylenically unsaturated oligomer of a type and in an amount effective to enhance the adhesion between the cured ink and the substrate. Exemplary oligomers include ethylenically unsaturated oligomers of the following general classes: urethane, polyether, polyester, polycarbonate, polyestercarbonate, and the like.

Suitable oligomers for this purpose have urethane repeating units and two or more ethylenically unsaturated functional groups, which can include, for example, acrylate, methacrylate, allyl, and vinyl groups, particularly acrylate and vinyl ether groups. Aliphatic, cycloaliphatic, or mixed aliphatic and cycloaliphatic urethane repeating units may be used. Urethanes are typically prepared by the condensation of a diisocyanate with a diol. Aliphatic urethanes having at least two urethane moieties per repeating unit are useful, wherein the diisocyanate and diol used to prepare the urethane comprise divalent aliphatic groups that may be the same or different. The divalent aliphatic units can be $C_2$ to $C_{30}$, specifically $C_3$ to $C_{25}$, more specifically $C_4$ to $C_{20}$ alkylene groups, including straight chain alkylene, branched chain alkylene, cycloalkylene, heteroalkylene such as oxyalkylene (including polyetheralkylene), and the like. Examplary aliphatic diradical groups include but are not limited to ethylene; 1,2- and 1,3-propylene; 1,2-, 1,3-, and 1,4-butylene; 1,5-pentamethylene; 1,3-(2,2-dimethyl)propylene; 1,6-hexamethylene; 1,8-octamethylene; 1,5-(2,2,4-trimethyl)pentylene, 1,9-nonamethylene; 1,6-(2,2,4-trimethyl)hexylene; 1,2-, 1,3-, and 1,4-cyclohexylene; 1,4-dimethylene cyclohexane; 1,11-undecamethylene; 1,12-dodecamethylene, and the like.

Polyester and polyether urethane oligomers functionalized with ethylenic unsaturation are particularly useful. The ethylenic unsaturation may be provided by functional groups such as acrylate, $C_1$-$C_4$ alkyl(acrylate) (e.g., methacrylate, ethacrylate, etc.), vinyl, allyl, acrylamide, $C_1$-$C_4$ alkyl(acrylamide), and the like groups. The reactive functionality of these urethane acrylates is greater than 1, specifically about 2 reactive groups per oligomer molecule.

Suitable polyether or polyester ethylenically unsaturated urethane oligomers include the reaction product of an aliphatic polyether or polyester polyol with an aliphatic or aromatic polyisocyanate that is functionalized with ethylenic unsaturation using a monomer containing the ethylenic unsaturation. Such oligomers may be prepared using procedures well known in the art.

The polyether polyol is based on a straight chained or branched alkylene oxide of from one to about twelve carbon atoms, and may be prepared by any method known in the art.

The aliphatic polyisocyanate component contains about 4 to 20 carbon atoms. Exemplary aliphatic polyisocyanates include isophorone diisocyanate; dicyclohexylmethane-4,4'-diisocyanate; 1,4-tetramethylene diisocyanate; 1,5-pentamethylene diisocyanate; 1,6-hexamethylene diisocyanate; 1,7-heptamethylene diisocyanate; 1,8-octamethylene diisocyanate; 1,9-nonamethylene diisocyanate; 1,10-decamethylene diisocyanate; 2,2,4-trimethyl-1,5- pentamethylene diisocyanate; 2,2'-dimethyl-1,5-pentamethylene diisocyanate; 3-methoxy-1,6-hexamethylene diisocyanate; 3-butoxy-1,6-hexamethylene diisocyanate; omega, omega'-dipropylether diisocyanate; 1,4-cyclohexyl diisocyanate; 1,3-cyclohexyl diisocyanate; trimethylhexamethylene diisocyanate; and combinations comprising at least one of the foregoing.

Suitable aromatic polyisocyanates include toluene diisocyanate, methylene bis-phenylisocyanate (diphenylmethane diisocyanate), methylene bis-cyclohexylisocyanate (hydrogenated MDI), naphthalene diisocyanate, and the like.

The monomer containing the ethylenic unsaturation is capable of providing at least one ethylenically unsaturated moiety to the oligomer, such as acrylate or methacrylate. Typically the ethylenic unsaturation monomer contains a hydroxyl-terminus. Such monomers include, for example, hydroxyalkyl acrylates or methacrylates such as hydroxyethyl acrylate, hydroxyethyl methacrylate, hydroxypropyl acrylate, hydroxypropyl methacrylate, hydroxybutyl acrylate, hydroxybutyl methacrylate, and the like.

The molar ratio of the polyol, diisocyanate, and ethylenic unsaturation monomer can be approximately 1:2:2.

Examples of suitable urethane acrylate oligomers include aliphatic polyester based urethane diacrylate oligomers commercially available from Sartomer: CN991 (viscosity = 600 centipoise (cP) at 60 °C); CN962 (viscosity = 58,250 cP at 60 °C); CN964 (viscosity = 17,675 cP at 60 °C); and CN966H90. CN966H90 is an aliphatic polyester urethane diacrylate oligomer blended with 10% 2(2-ethoxyethoxy) ethyl acrylate (viscosity = 10,970 cP at 60 °C).

The polyether or polyester ethylenically unsaturated urethane oligomers can have a molecular weight of up to about 50,000 atomic mass units (AMU), specifically about 500 to about 50,000; more specifically about 1000 to about 40,000; and yet more specifically about 1200 to about 30,000 AMU. The viscosity of the urethane acrylate can be about 500 cP to about 65,000 cP at 60 °C, specifically about 1000 to about 45,000, more specifically about 5000 to about 30,000, and yet more specifically about 10,000 to about 20,000 cP.

In particular, use of an ethylenically unsaturated polyurethane oligomer having a viscosity greater than 9,000 centipoise can provide excellent adhesion compatibility with a wide range of substrates, including plastic substrates. It has further surprisingly been found that use of urethane oligomers can significantly improve the gloss and flexibility of the inkjet ink after cure. Without being bound by theory, it is believed that the presence of the higher molecular weight urethane provides elasticity to the formulation to stabilize it during jetting, and more elasticity to the solidified inkjet ink upon curing. Improved elastic properties in the cured ink can reduce phase separation in the cured inkjet ink resulting from formation of Bénard cells, i.e., convection cells of approximately consistent size which form during the curing of the liquid inkjet ink. Use of an ethylenically unsaturated polyurethane oligomer provides a smooth, uniform surface that can be observed using a suitable method, such as optical microscopy. Improved surface finish provides a high surface gloss, which can be measured using a suitable method such as 60 degree gloss. A suitable surface gloss for the inkjet ink is greater than or equal to about 90, specifically greater than or equal to about 100, and more specifically greater than or equal to about 105, measured using 60 degree gloss according to ASTM D2457. The above improvements can be obtained without significantly affecting the jetting performance of the inkjet ink.

The ethylenically unsaturated polyurethane oligomer can be present in an amount of about 0 to about 15 wt.%, specifically about 2 to about 12 wt.%, more specifically about 5 to about 10 wt.% of the total weight of the radiation curable inkjet ink.

In another embodiment, the radiation curable ink is formulated to have improved cure in the presence of oxygen, even when jetted at thin application levels. Such formulations do not need an inert gas to be provided in the region of the jetted ink, and eliminating the inerting system attached to the jet print head reduces cost and improves convenience. One approach to reducing the oxygen inhibition of the inkjet ink is the addition of a multifunctional thiol compound to the inkjet ink. Inks containing the multifunctional thiol compound can be cured even when jetted in very thin amounts. Use of thin application levels allows fast cure and/or use of a lower intensity light source.

The multifunctional thiol compounds comprise two or more thiol groups per molecule, and can be monomeric or oligomeric. Combinations of one or more multifunctional thiol compounds can be used in the curable compositions. Exemplary multifunctional thiol monomers include alkyl thiol compounds such as 1,2-dimercaptoethane, 1,6-dimercaptohexane, neopentanetetrathiol, and the like, pentaerythritol tetra(3-mercapto propionate), 2,2-bis(mercaptomethyl)-1,3-propanedithiol, and the like, aryl thiol compounds such as 4-ethylbenzene-1,3-dithiol, 1,3-diphenylpropane-2,2-dithiol, 4,5-dimethylbenzene-1,3-dithiol, 1,3,5-benzenetrithiol, glycol dimercaptoacetate, glycol dimercaptopropionate, pentaerythritol tetrathioglycolate, trimethylolpropane trithioglycolate, and the like. Also suitable are polyethylene glycol dimercaptoacetate oligomers.

Suitable oligomeric multifunctional thiols include, for example, (mercaptoalkyl)alkylsiloxane homopolymers or copolymers, such as (mercaptopropyl)methylsiloxane homopolymers or copolymers, mercapto-terminated oligomers, mercapto-containing polysilsesquioxanes, and the like. Examples of polyorganosiloxanes having alkylthiol groups can be found in U.S. Patent Nos. 3,445,419, 4,284,539, and 4,289,867, which is incorporated herein by reference. Examples of other oligomeric multifunctional thiols can be found in U.S. Patent No. 3,661,744.

An effective amount of thiol compound may be determined by adjusting the ratio of unsaturated functionality of the ethylenically unsaturated compounds to the thiol functionality of the thiol compound. Ratios of unsaturation:thiol can be about 0.40:1.00 to about 2.50:1.00, specifically about 0.50:1.00 to about 2.00:1.00; more specifically about 0.75:1.00 to about 1.25:1.00, yet more specifically about 0.85:1.00 to about 1.20:1.00, still yet more specifically about 0.95:1.00 to about 1.05:1.00, and further more specifically in a stoichiometric. The thiol can be present in the inkjet ink in an amount of up to about 15 wt.% based on the total weight of the ink, specifically about 1 to about 12 wt.%, more specifically about 3 to about 10 wt.%, yet more specifically about 5 to about 8 weight %, based on the total weight of the ink.

The radiation curable inkjet ink is preferably substantially non-aqueous and/or substantially free of a solvent, that is, a compound having a boiling point at atmospheric pressure of less than about 120°C. As used herein, substantially non-aqueous means that no water is added to the inks other than the incidental amounts of moisture derived from ambient conditions. Non-aqueous inks can therefore have less than about 3 wt.% of water, more specifically less than about 2 wt.% of water, even more specifically less than about 1 wt.% of water, based on the total weight of the ink. Substantially free of solvents means no solvent is added to the inks, such that the ink contains less than about 3 wt.% of solvent, more specifically less than about 2 wt.% of solvent, and even more specifically less than about 1 wt.% of solvent, based on the total weight of the ink.

The radiation curable inks further contain a pigment composition comprising a pigment or combination of pigments to provide the desired color. Combinations of pigments and dye can be used, provided that the thermal stability of the resulting ink is maintained.

Exemplary pigments include those having the following Color Index classifications: Green PG 7 and 36; Orange PO 5, 34, 36, 38,43, 51, 60, 62, 64, 66, 67 and 73; Red PR 112, 149, 170, 178, 179, 185, 187, 188, 207, 208, 214, 220, 224, 242, 251, 254, 255, 260 and 264; Magenta/Violet PV 19, 23, 31, and 37, and PR 122, 181 and 202; Yellow PY 17, 120, 138, 139, 155, 151,168, 175, 179, 180, 181 and 185; Blue PB 15,15:3,15:4; Black PB 2,5 and 7; carbon black; titanium dioxide (including rutile and anatase); zinc sulfide, and the like.

Other specific pigments include, for example, IRGALITE BLUE GLVO, MONASTRAL BLUE FGX, IRGALITE BLUE GLSM, HELIOGEN BLUE L7101F, LUTETIA CYANINE ENJ, HELIOGEN BLUE L6700F, MONASTRAL GNXC, MONASTRAL GBX, MONASTRAL GLX, MONASTRAL 6Y, IRGAZIN DPP ORANGE RA, NOVAPERM ORANGE H5G70, NOVPERM ORANGE HL, MONOLITE ORANGE 2R, NOVAPERM RED HFG, HOSTAPERM ORANGE HGL, PALIOGEN ORANGE L2640, SICOFAST ORANGE 2953, IRGAZIN ORANGE 3GL, CHROMOPTHAL ORANGE GP, HOSTAPERM ORANGE GR, PV CARMINE HF4C, NOVAPERM RED F3RK 70, MONOLITE RED BR, IRGAZIN DPP RUBINE TR, IRGAZIN DPP SCARLET EK, RT-390-D SCARLET, RT-280-D RED, NOVAPERM RED HF4B, NOVAPERM RED HF3S, NOVAPERM RD HF2B, VYNAMON RED 3BFW, CHROMOPTHAL RED G, VYNAMON SCARLET 3Y, PALIOGEN RED L3585, NOVAPERM RED BL, PALIOGEN RED 3880 HD, HOSTAPERM P2GL, HOSTAPERM RED P3GL, HOSTAPERM RED E5B 02, SICOFAST RED L3550, SUNFAST MAGENTA 122, SUNFAST RED 122, SUNFAST VIOLET 19 228-0594, SUNFAST VIOLET 19 228-1220, CINQUASIA VIOLET RT-791-D, VIOLET R NRT-201-D, RED B NRT-796-D, VIOLET R RT-101-D, MONOLITE VIOLET 31, SUNFAST MAGENTA 22, MAGENTA RT-243-D, MAGENTA RT 355-D, RED B RT-195-D, CINQUASIA CARBERNET RT-385-D, MONOLITE VIOLET R, MICROSOL VIOLET R, CHROMOPTHAL VIOLET B, ORACET PINK RF, IRGALITE YELLOW 2GP, IRGALITE YELLOW WGP, PV FAST YELLOW HG, PV FAST YELLOW H3R, HOSTAPERM YELLOW H6G, PV FAST YELLOW, PALIOTOL YELLOW D1155 and IRGAZIN YELLOW 3R.

A number of different carbon black type pigments are commercially available, for example and carbon blacks such as SPECIAL BLACK 100, SPECIAL BLACK 250, SPECIAL BLACK 350, FW1, FW2 FW200, FW18, SPECIAL BLACK 4, NIPEX 150, NIPEX 160, NIPEX 180, SPECIAL BLACK 5, SPECIAL BLACK 6, PRINTEX 80, PRINTEX 90, PRINTEX 140, PRINTEX 150T, PRINTEX 200, PRINTEX U, and PRINTEX V, all available from Degussa, MOGUL L, REGAL 400R, REGAL 330, and MONARCH 900, available from Cabot Chemical Co., MA77, MA7, MA8, MA11, MA100, MA100R, MA100S, MA230, MA220, MA200RB, MA14, #2700B, #2650, #2600, #2450B, #2400B, #2350, #2300, #2200B, #1000, #970, #3030B, and #3230B, all available from Mitsubishi, RAVEN 2500 ULTRA, Carbon black 5250, and Carbon Black 5750 from Columbia Chemical Co., and the like.

A number of titanium oxide pigments are also known. Nanostructured titania powders may be obtained, for example, from Nanophase Technologies Corporation, Burr Ridge, Ill, or under the trade names KRONOS® 1171 from Kronos Titan. As will be described in more detail below, titanium dioxide particles are prone to settling, and are therefore often surface treated. The titanium oxide particles can be coated with an oxide, such as alumina or silica, for example. One, two, or more layers of a metal oxide coating may be used, for example a coating of alumina and a coating of silica, in either order. This type of coated titanium oxide is commercially available from E. I. du Pont de Nemours and Company, Wilmington, Del., under the trade name R960. In the alternative, or in addition, the titanium oxide particles may be surface treated with an organic compatibilization agent such as a zirconate, titanate, silanes, silicones, and the like. Surface treatment of titanium dioxide coated with alumina includes, for example, a silicone surface treatment, preferably a dimethicone treatment using dimethicone oil or a stearic acid surface treatment. Stearic acid and alumina coated ultrafine titanium dioxide particles are commercially available, such as UV-Titan M160 from Presperse, Inc., South Plainfield, N.J. Suitable silanes include, for example, trialkoxysilanes, for example 3-(trimethoxysilyl)propyl methacrylate, which is available commercially from Dow Chemical Company, Wilmington, Del. under the trade name Z6030. The corresponding acrylate may also be used. Suitable titanium dioxides may include a decyltrimethoxysilane (DTMS) treated titanium dioxide (40 nanometer average particle diameter) from Tayca Corporation, TD3103 treated titanium dioxide available from Tayca Corporation, the titanium dioxides available from NANOTEK or Nanophase Technologies Corporation. Surface-treated titanium oxide hydroxide ($TiO(OH)_2$) with a 30 nanometer particle size is available as STT100H™ from Titan Kogyo).

The pigments are pre-dispersed prior to incorporation into the inkjet inks, generally in one or more of the radiation curable materials used in the radiation curable composition. For example, the pigment can be dispersed in a multifunctional material such as tripropylene glycol diacrylate, a propoxylated neopentyl glycol diacrylate, a hyperbranched oligomer as described above, and the like. Other additives may be present to aid in dispersion of the pigments, for example AB-type block copolymers of an alkyl acrylate and a methyl methacrylate). Generally, the pigment comprises about 5 to about 50% of the dispersion.

The pigments generally are of a size that can be jetted from the print head without substantially clogging the print nozzles, capillaries, or other components of the print equipment. Pigment size can also have an effect on the final ink viscosity. The average particle size of the pigment is about 0.1 to about 500 nanometers, specifically less than about 300 nanometers, and more specifically less than about 200 nanometers. For example, the pigments can have a D50 of less than or equal 200 nanometers.

The ink is not limited to any particular color. Suitable colors include, for example cyan, magenta, yellow, black, white, orange, green, light cyan, light magenta, violet, and the like. By excluding pigment, a clear ink can also be prepared.

The amount of pigment employed in the ink will depend on the choice of pigment and the depth of color desired in the resulting cured material. In general, the pigment is used in an amount of about 0.01 to 50 wt.%, specifically about 0.05 to about 10 wt.%, and more specifically about 0.05 to about 7.5 wt.% of the total weight of the inkjet ink

Optionally, the pigment composition can be in the form of a dispersion comprising pigment particles, a radiation curable diluent, and a dispersant to stabilize the dispersed form of the pigment particles. The radiation curable diluent can comprise epoxy groups or ethylenic unsaturation, to provide crosslinking with the ethylenically unsaturated materials of the radiation curable composition. In one embodiment, the diluent can be the same as one or more of the components of the radiation curable composition.

Use of a dispersant improves the stability of the pigment dispersion, and preferably substantially reduces or eliminates agglomeration or settling of the pigment particles during manufacture of the ink, storage, and/or use. The dispersant can be selected from a variety of materials including silicones, and other monomers or oligomers having good wetting properties for the pigment.

Suitable pigments and pigment dispersions can be obtained from a variety of commercial sources including Abbey Masterbatch Ltd., Ashton under Lyne UK; Small Products LTD., UK; Aellora, Keene, N.H.; Choksi Pigments, Gujarat, India; Noveon Hilton Davis, Inc. of Cincinnati, OH; Penn Color Inc. of Doylestown, PA; Sharda Dye Chem, Gujarat, India; Spectrum Dyes & Chemical Gujarat, India; Taiwan Nanotechnology Corporation, Taiwan; Tianjin Angel Trading Development Co., Ltd. Tianjin, China; etc.

The radiation curable inks also contain a polymerization initiator, which is selected based on the type of colorant present and the radiation wavelength used to cure the ink. A blend of photoinitiators can be used, having peak energy absorption levels at varying wavelengths within the range of the selected radiation for cure. Preferably, the photoinitiator and photoiniator blends are sensitive to the wavelengths not absorbed, or only partially affected, by the pigments.

Examples of suitable photoinitiators include 2-benzyl-2-(dimethylamino)-4'-morpholinobutyrophenone; 2-hydroxy-2-methylpropiophenone; trimethylbenzophenone; methylbenzophenone; 1-hydroxycyclohexylphenyl ketone; isopropyl thioxanthone; 2,2-dimethyl-2-hydroxy-acetophenone; 2,2-dimethoxy-2-phenylacetophenone; 2-methyl-1-[4-(methylthio)phenyl]-2-morpholino-propan-1-one; 2,4,6-trimethylbenzyl-diphenyl-phosphine oxide; 1-chloro-4- propoxythioxanthone; benzophenone; bis(2,6-dimethoxybenzoyl)-2,4,4-trimethyl pentyl phosphine oxide; 1-phenyl-2-hydroxy-2-methyl propanone; bis(2,4,6-trimethylbenzoyl)phenylphosphine oxide; camphorquinone; and the like. Combinations comprising one or more the foregoing may also be used. Suitable commercially available photoinitiators include, but are not limited to Irgacure 907, Irgacure 819, Irgacure 2959, Irgacure 184, Irgacure 369, Benzophenone, SarCure SR1124 (ITX), Darocur D1173, Irgacure 651, TZT (SarCure SR1137), and combinations thereof.

The polymerization initiators are used in amounts effective to initiate polymerization in the presence of the curing radiation, typically about 3 to about 25 wt.%, specifically about 5 to about 20 wt.%, and more specifically about 7 to about 15 wt.%, based on the total weight of the ink.

The photoinitiator composition can further contain a coinitiator or synergist, specifically an amine coinitiator such as, for example, ethyl-4-(dimethylamino)benzoate, 2-ethylhexyl dimethylaminobenzoate, and dimethylaminoethyl (meth)acrylate, and the like. Reactive amine polymerization coinitiators can be used, such as the commercially available coinitiator CN383, CN386, and the like. The coinitiator can be present in the ink in an amount of about 0.5 to about 20 wt.%, specifically about 1 to about 10 wt.%, and more specifically about 2 to about 7 wt.%, based on the total weight of the ink.

The inkjet ink composition can also include, as additives, an ultraviolet light absorbing material (UVA) and/or a hindered amine light stabilizer (HALS) to provide photolytic stability to the ink. The UVA and or HALS can be added to the ink composition to improve the weatherability of the cured ink. These additives provide the retention of color through the lifetime of the cured ink.

Commercial versions of UVAs include, but are not limited to Tinuvin 384-2, Tinuvin 1130, Tinuvin 405, Tinuvin 411L, Tinuvin 171, Tinuvin 400, Tinuvin 928, Tinuvin 99, combinations thereof, and the like. Commercially available examples of HALS include, but are not limited to Tinuvin 123, Tinuvin 292, Tinuvin 144, Tinuvin 152, and the like. There are available as well combinations of UVA and HALS materials, useful in radiation curable inks, and commercially available as Tinuvin 5055, Tinuvin 5050, Tinuvin 5060, Tinuvin 5151. It should be recognized that this list of compounds is exemplary and should not be considered as limited thereto.

Other additives can be included in the radiation curable ink compositions, including stabilizers, antioxidants, leveling agents, and additional dispersion agents. When used, the stabilizers can be present in the ink in an amount of about 0.001 to about 2 wt.%, specifically about 0.01 to about 0.5 wt.%, and more specifically about 0.1 to about 0.3 wt.%, based on the total weight of the ink.

Leveling agents can be used to adjust the wetting ability of the inkjet ink, i.e., the ability of the ink to spread uniformly across a surface. Wetting occurs where the adhesive forces between the inkjet ink and substrate are stronger than the cohesive forces of the ink. Without being bound by theory, it is believed that non-wetting performance, such as beading and contracting, correlates to stronger cohesive forces in the inkjet ink than adhesive forces between the inkjet ink and the substrate. Beading occurs where the inkjet ink, after application, forms a string of disconnected droplets instead of remaining a uniform coat as applied, and contracting occurs where the inkjet ink shrinks from the furthest extent of its initial application to a surface.

Leveling agents suitable for use in the inks include ionic or non-ionic leveling agents. Specifically useful leveling agents are ionic, where the leveling agent can more be monoionic or polyionic. Polyionic leveling agents can be polymeric, having at least one ionizable site on the polymeric backbone. The ionizable sites on the polymer backbone may be anionic, cationic, or zwitterionic (comprising a combination of both anionic and cationic ionizable sites). Suitable polymeric leveling agents having anionic ionizable sites include poly(meth)acrylates, which may comprise homopolymers or copolymers of methacrylic acid, acrylic acid, maleic acid, fumaric acid, crotonic acid, itaconic acid, or the like, and that are made ionic by treatment with an amine or hydroxide base. Suitable polymeric leveling agents having cationic ionizable sites, include for example, amine substituted poly(meth)acrylates made ionic, which can comprise copolymers of 2-aminoethyl(meth)acrylate, 2-(N,N-dimethylamino) ethyl acrylate, 2-(N,N-dimethylamino) ethyl methacrylate (DMAEMA), and the like, that are subsequently made ionic by treatment with an acid or excess alkylating agent. A suitable zwitterionic poly(meth)acrylate can comprise at least one of each of the anionic and cationic monomers described above. A non-limiting example of a suitable anionic polyacrylate copolymer is BYK 381, available from BYK Chemie USA Inc, which is available as a 52 wt% solids solution in 2-methoxy methyl ethoxy propanol.

Effective amounts of leveling agents where used, is about 0.01 to about 2 wt%, specifically about 0.05 to about 1.5 wt%, more specifically about 0.1 to about 1.0 wt%, of the total weight of the inkjet ink.

Good wetting ability of the inkjet inks, particularly on a treated plastic surface, can be achieved by use of the appropriate balance of monofunctional, difunctional, and tetrafunctional curable materials, especially monomers. A radiation curable inkjet ink with good wetting ability comprises about 2 to about 8 wt.% monofunctional ethylenically unsaturated material, about 43 to about 49 wt.% difunctional ethylenically unsaturated material, about 7 to about 13 wt.% tetrafunctional ethylenically unsaturated material, about 23 to about 29 wt.% pigment dispersion; and about 10 to about 16 wt.% polymerization initiator composition. This formulation may further optionally comprise about 0.1 to 1.0 wt% leveling agent, particularly an ionic polyacrylate leveling agent. This formulation is particularly effective when the pigment dispersion comprises carbon black. The ink has a static surface tension of about 33 to about 40 dynes per centimeter.

The inkjet recording system for use with the radiation curable inks are not particularly limited, and include, for example, an electric charge controlling system of jetting out the ink by utilizing an electrostatic induction force, a drop-on-demand system (pressure pulse system) utilizing a vibration pressure of a piezoelectric element, an acoustic inkjet system of converting electric signals into acoustic beams, irradiating the beams on the ink and jetting out the ink by utilizing the radiation pressure, and a thermal inkjet (bubble jet) system of heating the ink to form a bubble and utilizing the pressure generated.

The inks described herein are stable enough to be jetted at print speeds of about 1 kHz or greater, about 4 kHz or greater, more specifically about 8 kHz or greater, yet more specifically about 10 kHz or greater, yet more specifically about 16 kHz or greater, and still yet more specifically about 32 kHz or greater. Such increased print speeds can be employed without sacrificing print image quality or resolution.

Piezoelectric print heads having print speeds of about 8 kHz or greater can be used, specifically about 10 KHz or greater, specifically about 16 kHz or greater, and yet more specifically about 32 kHz or greater print speed.

The inks resulting from the combination of materials described above have meniscus recovery characteristics that allow the use of these inks with a impulse inkjet print head at high jetting frequencies. The formation of a stable meniscus at a consistent starting position in the nozzle allows the proper formation of a subsequent ink droplet by preventing starving or wetting out of the droplets, as caused by insufficient ink or excessive ink in the nozzle, respectively.

When a droplet is jetted from the spray nozzle of a print head, a thin tether of ink extends from the nozzle tip to the droplet. As the distance between the droplet and the nozzle tip exceeds a predetermined distance, the tether disintegrates, and the disintegration products of the tether either incorporate into the drop, form smaller "satellite" droplets, or "snap back" to the nozzle tip. The latter amount of material re-forms a meniscus in the nozzle, provided the time interval between jetting events exceeds the recovery time needed for the cohesive forces in the ink and the adhesive forces between the nozzle tip and the ink to "snap back" or draw back to the nozzle tip. The length of the tether and the amount of time required for "snap back" depends primarily on the properties of the ink as described above, as well as jetting speed, nozzle composition, and nozzle diameter, the latter three of which are fixed properties of the print head.

The static surface tension is measured at thermal, chemical, and mechanical equilibrium between the ink and the measurement instrument, and can correlate with how easily the ink drop wets the substrate that it is jetted onto. Various methods can be used to determine static surface tension, for example the du Nouy method. The inks may have a static surface tension of about 22 to about 40 dynes per centimeter, specifically about 24 to about 38 dynes per centimeter, and more specifically about 26 to about 36 dynes per centimeter at 25°C.

Ink jet printing heads are typically heated to an optimal operating temperature. The temperature used is largely dependent on the properties of the ink formulation, so the process may be adjusted to meet the requirements of the formulation. Typical temperatures for the operation of a print head are room temperature to about 70 °C, where a more optimal operating temperature range is about 35 to about 60 °C. A given ink formulation with a sufficiently high activation energy for fluidization may adapt better to a lower print head operating temperature.

It is desirable for an inkjet ink formulation to have similar jetting characteristics over the range of print head operating temperatures. The capacity of an inkjet ink to jet over temperature may be described by the activation energy of fluidization (AEF) for the ink, which is derived from the relationship of the viscosity of the ink to the temperature. Viscosity is obtained for a range of temperatures, at specific shear rates of about 1 to about 170,000 sec$^{-1}$. The energy of activation of fluidization is described using the Arrhenius relationship:

$$\eta = Ae^{E/RT};$$

and taking the logarithm,

$$\ln(\eta) = \ln A + E*(R*T)^{-1};$$

wherein $\eta$ is viscosity, R is the gas constant (8.3), T is the temperature in degrees K, and E is the activation energy of fluidization in kJ/mol, and A is a constant. A plot of $\ln(\eta)$ versus the inverse of temperature (1/T) yields a linear plot of a line with a slope E/R, where E is the activation energy of fluidization. Where the slope of the plot is less steep, i.e., is flatter, the AEF is lower and shows less of an increase with temperature, and the jetting performance of the inkjet ink is more consistent over the range of jetting temperatures. An inkjet ink having a lower AEF is desirable for use in a printing application wherein the ink is used over a range of print head operating temperatures. A lower AEF is specifically useful where inks have a high shear rate, i.e., shear rates of greater than 100,000 per second, wherein the shear rates encountered by the inkjet ink during firing in the print head may typically be in excess of this value. Inkjet inks can encounter shear rates as high as 1,000,000 sec$^{-1}$ or greater in the print head during firing.

Surprisingly, it has been found that the inkjet ink formulations described herein have a lower AEF over the broad operating temperature range used in the print head, which provides a wider operating window over increasing temperature. The inks show a consistent thermal requirement over the jetting temperatures used, and maintain a consistent viscosity at high shear rates. A lower AEF is a useful property for inks exhibiting Newtonian behavior, in which the viscosity shows a linear response with increasing shear rate. A lower AEF in such inkjet inks, where the inks are used at very high shear rates as found in the print head, provide better jetting behavior. While not wishing to be bound by theory, fluidization of the ink is a time dependent process requiring a transfer of energy over time to achieve fluidization of the ink. The lower AEF means a lower energy input and hence a shorter time period transpiring between the initiation of the firing, the fluidization of the ink, and the jetting of the ink. This is specifically applicable to high firing rates of 10 kHz or greater. Further, it has been found that the inks described herein show a viscosity temperature dependency allowing these inks to be jetted at a lower operating temperature at the print head.

The AEF for all colors of inkjet ink (cyan, magenta, yellow, and black (CMYK); white; and basemix (uncolored)) can be about 7 to about 40 kJ/mol, obtained at a shear rate of about 1 to about 170,000 sec$^{-1}$, and at a temperature of about 25 to about 50°C. In an embodiment, the AEF value for a CMYK inkjet ink can be about 18 to about 40 kJ/mol, obtained at a shear rate of about 1 to about 170,000 sec$^{-1}$ and a temperature of about 25 to about 50°C. In another embodiment, the AEF for a white inkjet ink can be about 12 to about 28 kJ/mol, obtained at a shear rate of about 3,500 to about 100,000 sec$^{-1}$ and a temperature of about 25 to about 50°C.

AEF values may be affected by the composition of the ink, specifically where an ethylenically unsaturated oligomer is or is not present. In an embodiment, where an ethylenically unsaturated oligomer is present, the CMYK inkjet ink has a lower AEF, i.e. about 15 to about 26 kJ/mol when obtained at a shear rate of about 3,500 to about 170,000 sec$^{-1}$ and a temperature of about 25 to about 50°C. In another embodiment, where an ethylenically unsaturated oligomer is not present, the CMYK inkjet ink has a higher AEF, i.e., about 18 to about 40 kJ/mol, obtained at a shear rate of about 1 to about 170,000 sec$^{-1}$ and a temperature of about 25 to about 50°C. Similarly, white inkjet inks can be affected by composition. In one embodiment, where an ethylenically unsaturated oligomer is present, the white inkjet ink can have a lower AEF, i.e. about 7 to about 35 kJ/mol when obtained at a shear rate of about 3,500 to about 100,000 sec$^{-1}$ and a temperature of about 25 to about 50°C. In another embodiment, where an ethylenically unsaturated oligomer is not present, the white inkjet ink can have a higher AEF, i.e., about 22 to about 28 kJ/mol when obtained at a shear rate of about 3,500 to about 100,000 sec$^{-1}$ and a temperature of about 25 to about 50°C.

In one embodiment, wherein the inkjet ink is used at lower print head operating temperatures, the ink has a viscosity of about 5 to about 80 cP at 40°C at a shear rate of about 500 per second (sec$^{-1}$), and an activation energy of fluidization of about 7 to about 40 kJ/mol; specifically a viscosity of about 10 to about 40 cP at 40°C at a shear rate of about 500 sec$^{-1}$, and an activation energy of fluidization of about 15 to about 35 kJ/mol; and more specifically a viscosity of about 12 to about 20 cP at 40°C at a shear rate of about 500 sec$^{-1}$, and an activation energy of fluidization of about 20 to about 30 kJ/mol. In a specific embodiment, the inkjet ink is a cyan, magenta, yellow, or black ink having a viscosity of about 5 to about 20 cP at 40°C at a shear rate of about 500 sec$^{-1}$, and an activation energy of fluidization of about 18 to about 40 kJ/mol.

Research by the inventors hereof has shown that present commercially available inkjet inks approach Newtonian behavior even at high shear rates, e.g., up to about $1.5 \times 10^5$ sec$^{-1}$ or greater. In such inks the viscosity is independent of shear rates of about 1 to about $10^5$ sec$^{-1}$ or greater. Such near-Newtonian behavior may be defined as a change in viscosity of less than about $2 \times 10^{-3}$ Pa sec, specifically less than about $1.5 \times 10^{-3}$ Pa sec, more specifically less than about $1.0 \times 10^{-3}$ Pa sec, over the specified range of shear rates.

The jet operating window for an inkjet ink is the range of temperatures over which the inkjet ink can be jetted using an impulse print head (e.g. piezoelectric print head), while maintaining a suitable operating voltage for the print head. A suitable operating voltage for a piezoelectric print head is a voltage sufficient to cause the transducer in the print head to vibrate consistently and controllably, thus providing a stable pumping action for jetting the ink. Higher operating voltages provide a more forceful jet, and hence more accurate drop placement, which leads to better print quality. Useful operating voltages also depend upon the viscosity of the ink. Where the inkjet ink is too viscous, the piezoelectric print head cannot vibrate with sufficient force to achieve jetting within the upper limit of the print head operating voltage. Likewise, where the inkjet ink is not viscous enough, the inkjet ink is not jetted at a sufficiently high operating voltage to provide consistent ink flow, and poor print quality is obtained. An operating window for an inkjet ink, suitable for use in a piezoelectric print head operating at a frequency of 16 or 32 kHz, has a print head operating voltage of 0 to about 200 volts. A suitable inkjet ink remains jettable over as broad a range of temperatures as possible which correlate to a stable viscosity for the ink, wherein the range of temperatures can be from 25°C to about 70°C. It is desired also that the operating voltage applied to the piezoelectric print head is stable for an ink used in this temperature range. Thus, it is desirable that an ink have a wider jet operating window, wherein the ink is less sensitive, i.e., more robust, with respect to changes in operating temperature and operating voltage. A robust jet operating window is wherein less than or equal to 7 percent of the total number of nozzles (<10 nozzles in a 128 nozzle print head fail to jet or are deviated from straight) after three minutes of printing.

An inkjet ink thus has a suitable operating window of about 80 to about 140 volts, jetted over a temperature range of about 25°C to about 70°C.

Further, a suitable ink may be stable within the operating window, wherein a stable ink has a jetting voltage that varies by less than or equal to about 30 volts, specifically less than or equal to about 25 volts, and more specifically less than or equal to about 20 volts within the print head operating window.

In an embodiment, a cyan (C) inkjet ink has a jet operating window of at least about 80 to about 120 volts, a magenta (M) inkjet ink has a jet operating window of at least about 80 to about 120 volts, a yellow (Y) inkjet ink has a jet operating window of at least about 80 to about 120 volts, and a black (K) inkjet ink has a jet operating window of at least about 80 to about 120 volts, wherein the operating window is measured at a temperature of about 30 to about 70 degrees C, and at a jetting frequency of about 16 kHz. In another embodiment, a cyan inkjet ink has a jet operating window of at least about 80 to about 100 volts, a magenta inkjet ink has a jet operating window of at least about 80 to about 110 volts, a yellow inkjet ink has a jet operating window of at least about 80 to about 110 volts, and a black inkjet ink has a jet operating window of at least about 80 to about 110 volts, wherein the operating window is measured at a temperature of about 30 to about 50 °C, and at a jetting frequency of about 32 kHz.

In a specific embodiment, a CMYK ink having optimal jetting performance at 16 kHz comprises a monofunctional ethylenically unsaturated monomer, a difunctional ethylenically unsaturated monomer, and a polyfunctional ethylenically unsaturated monomer, wherein a polyfunctional ethylenically unsaturated monomer may be a trifunctional, tetrafunctional, or a greater number of functional groups. In another specific embodiment, a CMYK ink having optimal jetting performance at 32 kHz comprises a monofunctional ethylenically unsaturated monomer, a difunctional ethylenically unsaturated monomer, and an ethylenically unsaturated oligomer,

The radiation curable ink, once ejected from the printer head, can be cured by exposure to a variety of radiation sources, including for example, ultraviolet light, visible light, electron beam, and the like; specifically ultraviolet light. Exemplary radiation sources include ultraviolet Light Emitting Diodes (LED); metal halide doped electrode and electrodeless bulbs available from Fusion UV and Hanovia; mercury vapor lamps; and the like. Specific lamps include H, V, and D lamps commercially available from Fusion UV ™.

In one embodiment, the curing is performed in the absence of oxygen. In this curing process, an inert gas is provided in the region of the jetted ink that is exposed to the curing radiation. A suitable inert gas includes nitrogen although other inert gases can be used.

The above and other considerations are of particular utility in the formulation of radiation curable inkjet inks, particularly radiation curable white inks with good stability, opacity, and/or cure speed. The white inkjet ink also provides excellent properties upon cure such as flexibility, gloss, adhesion to substrates including plastic (e.g. polycarbonate, polyester, polyvinyl chloride, and the like), intercoat adhesion, and/or compatibilization. Prior to curing the white inkjet ink exhibits excellent wetting/flow/coalescing. Formulating curable white inkjet inks poses unique challenges not found in other colors. Titanium dioxide pigment is predominantly used as the source of the white color, and is known to be prone to pigment settling before use. Approaches to rectify pigment settling have included providing a mechanical means of agitating the ink to reintroduce the pigments into a suspension, use of dispersants, surface modifying the titanium dioxide, and the like.

Generally, the radiation curable white inkjet ink comprises radiation curable materials; pigment dispersion comprising titanium dioxide; and polymerization initiator. The resulting white inks provide upon curing, a flexible film having excellent adhesion to common plastic substrates, and films free of pinholing or Benard cell formation.

In one embodiment, the white inkjet ink is formulated so that the pigments in the ink do not settle after about 25 days of storage at 25°C, as determined by visual inspection. Settling can also be measured using a Turbiscan LabExpert Sedimentometer.

In another embodiment, the pigments in the white ink do not settle more than about 5 percent after about 1 day, specifically after about 3 days, more specifically after about 5 days, yet more specifically after about 10 days, specifically after about 20 days, more specifically after about 30 days, yet more specifically about 50 days, and still yet more specifically after about 70 days at 25°C as determined by the change in backscattering of a sample of ink as a function of height using a Turbiscan LabExpert sedimentometer using a wavelength of 880 nm over a range of backscattering foci from about 5 mm to about 45 mm. For one embodiment, the settling data at 25°C can optionally be calculated from data obtained at 60°C using an Arrhenius equation. If the ink is stable for 24 hours at 60°C then its equivalent stability at room temperature is 11 days calculated as follows:

$$[(24) \times 365] / 772 = 11 \text{ days}$$

The denominator 772 is a factor and is derived as follows)

$$\text{Number of weeks} = 52 \text{ (weeks)} / (Y)^x$$

Y is the reaction doubling rate and is equal to a reaction rate at every 8 to 10°C increases by a factor of 1.6 to 2, with an assumption of 2.

x is the aging factor and equals [(Difference of the temperature at which the sample is aged and the ambient temperature) / (10)]

$$\text{Number of weeks} = 52/(2)^{3.5} = 4.6 \text{ weeks (approximately 32 days} = 772 \text{ hours), i.e. 772 hr at}$$

$$60°C = 365 \text{ days at room temperature.}$$

The cure speed of the inkjet ink (white or CMYK) can be determined by measuring either the percent reacted acrylate unsaturation (%RAU) after curing under particular conditions, or the percent degree of cure. The inkjet inks disclosed herein exhibit a % degree of cure of greater than about 90 %, specifically greater than about 93 %, more specifically greater than about 95 %, and yet more specifically greater than about 98%. The degree of cure can be measured both for the surface of the cured ink and the surface of the cured ink adjacent to the substrate on which it is cured.

The jet operating window of the white inkjet inks can be determined by plotting volts v. temperature in °C over a range of 80-140V at 30-70 °C, using a piezoelectric printhead (e.g., Spectra SE-128 printhead) with a loss of less than or equal to 7 percent of the total number of nozzles (<10 nozzles in a 128 nozzle print head fail to jet or are deviated from straight) after three minutes of printing.

It has also surprisingly been found that the use of an ethylenically unsaturated polyether or polyester urethane oligomer as described above provides for a broad jet operating window of the white ink as well as improved properties of the resulting cured ink, such as flexibility, adhesion, and pinhole-free films. When used, the amount of polyether or polyester urethane oligomer in the white curable inkjet ink compositions is about 0.1 to about 15 wt.%, specifically about 2 to about 10 wt.%, more specifically about 5 to about 7 wt.%, based on the total weight of the white ink. To balance the increase in viscosity of the ink due to the addition of the urethane acrylate oligomer, an ethylenically unsaturated material capable of lowering the viscosity of the ink is used as described above, for example tetrahydrofuran acrylate, hexanediol diacrylate, hetero difunctional monomer, and the like.

To provide sufficient opacity in a white inkjet ink, it is desirable to maximize the amount of titanium dioxide used in the ink formulation, but an increase in the amount of titanium dioxide generally results in an increased tendency for the pigment to settle out of the liquid ink. Increased opacity also decreases cure speed and/or cure-through, as the radiation energy (e.g. ultraviolet light) cannot penetrate to the lower regions of the ink layer. It has unexpectedly been found that the addition of an ethylenically unsaturated hyperbranched oligomer to the white inkjet inks allows increased loading of titanium dioxide, with substantially no settling of pigment particles over time. The hyperbranched oligomers are similar to dendrimers, and have structures that are densely branched, approximately spherical in shape and have a large number of end groups. Hyperbranched ethylenically unsaturated oligomers suitable for use in the inkjet inks, specifically the white inkjet inks to maintain good pigment dispersion, are those prepared from hydroxy functional hyperbranched polyols reacted with the appropriate ethylenically unsaturated monomer (e.g., hydroxy-terminated acrylates or halogen-terminated acrylates) to form acrylate esters. The number of ethylenic unsaturations present on the hyperbranched oligomers is greater than 1, specifically greater than about 2, and yet more specifically greater than about 3 per oligomer. Exemplary hyperbranched oligomers include those commercially available from Sartomer, such as CN2300, CN2301, CN2302, and CN2303.

When present, the amount of ethylenically unsaturated hyperbranched oligomer is about 0.1 to about 65 wt.%, based on the total weight of the ink, specifically about 3 to about 25 wt.%, more specifically about 5 to about 20 wt.%, and yet more specifically about 6 to about 17 wt.%.

The pigment loading of the white inks can be about 0.1 weight % to about 65 weight %, specifically about 5 weight % to about 40 weight %, yet more specifically about 10 weight % to about 35 wt.%, based on the total weight of the inkjet ink, and still yet more specifically about 12 weight % to about 20 weight %.

By increasing the amount of titanium oxide, the opacity of the resulting white ink is correspondingly increased. The degree of opacity, provided as a percent, can be measured according to ASTM D2805-96a at a film thickness of about 7 to about 10 micrometers, specifically about 9 micrometers, which are typical thicknesses obtained by preparing drawdowns of the ink using a #6 Mayer rod. The opacity of the white inkjet inks can be about 5% or greater, specifically about 10 % to about 65%, more specifically about 25% to about 55%, yet more specifically about 35% to about 53% as measured via a contrast ratio.

Suitable titanium dioxide pigments have average particle diameter sizes of about 0.1 to about 750 nm, specifically about 10 to about 500 nm, and more specifically about 50 to about 300 nm as determined by diluting 3 μL of ink into 10.0 mL of tripropylene glycol diacrylate in a scintillation vial and measuring the particles using a Malvern Zetasizer.

All of the above inks can be used for printing on to a wide variety of substrates, both absorbent and non-absorbent including, for example, paper; glass; plastic such as polycarbonate, polyester, polyolefins, vinyl chloride polymers, and foamed plastics; and metal such as steel, copper and aluminum.

To prepare the radiation curable inkjet inks, the ethylenically unsaturated materials are combined with the polymerization initiator and additives and blended to a uniform mixture with optional heating. A pigment dispersion, which can be separately prepared, is added to the mixture and blended to form a second mixture. The second mixture can be filtered one or more times through micrometer-sized filters to remove large particulates and agglomerated material. The filter mesh can be about 0.1 to about 2.5 micrometers.

Also disclosed herein is a method of determining a temperature-voltage jet operating window for a radiation curable inkjet ink comprising maintaining all jetting parameters while varying only temperature and voltage; jetting a radiation curable inkjet ink with an impulse print head at a desired firing frequency and at a first temperature over a range of fire pulse voltages for a period of time (e.g., three minutes); rate the jetting by giving a "pass" or "fail" according to pre-selected parameters (e.g. a "pass" can be if less than or equal to 7 percent of the total number of nozzles fail in the selected time limit [e.g. less than or equal to nine nozzles fail in a 128 nozzle print head] and a "fail" can be if more than 7 percent of the total number of nozzles fail (e.g. are not firing properly such as not providing a continuous jet or a jet of ink extremely deviated from straight); repeating the jetting and rating steps at additional temperatures to obtain a jet operating window.

The invention is further illustrated by the following non-limiting examples.

EXAMPLES

All of the component amounts in the following Tables are in wt.%, based on the total composition. Table 1 shows the various components used to prepare the radiation curable ink formulations described below. As used herein "NM" means not measured.

Table 1.

| Component | Name |
|---|---|
| Ethylenically unsaturated materials | |
| SR 9003 | propoxylated neopentyl glycol diacrylate |
| SR494 | ethoxylated pentaerythritol tetraacrylate |
| SR212 | 1,3-butylene glycol diacrylate |
| SR256 | 2-(2-ethoxyethoxy)ethyl acrylate |
| SR238 | Hexanediol diacrylate (Sartomer) |
| SR285 | Tetrahydrofurfuryl acrylate (Sartomer) |

(continued)

| Component | Name |
|---|---|
| Ethylenically unsaturated materials | |
| CD9087 | alkoxylated phenoxy ethylacrylate |
| TPGDA (SR306) | Tripropylene glycol diacrylate |
| VEEA | 2-(2-vinyloxyethoxy) ethyl acrylate (Nippon Shokubai Co.) |
| CN 966 H90 | 90% aliphatic polyester urethane diacrylate oligomer, blend with 10%, 2-(2-ethoxyethoxy) ethyl acrylate (Sartomer) |
| CN962 | Aliphatic polyester urethane acrylate oligomer (Sartomer) |
| CN964 | Aliphatic polyester urethane acrylate oligomer (Sartomer) |
| CN991 | Aliphatic polyester urethane acrylate oligomer (Sartomer) |
| CD560 | 3-mole ethoxylated hexanediol diacrylate (Sartomer) |
| Ebecryl 40 (EB 40) | Polyether tetra-acrylate monomer (Surface Specialties) |
| CN2302 | hyperbranched polyester acrylate oligomer (Sartomer) |
| Polymerization initiators or coinitiators | |
| CN383 | reactive monofunctional amine acrylate coinitiator |
| CN 386 | Amine adduct of tripropyleneglycol diacrylate (Sartomer) |
| I-369 | 2-benzyl-2-(dimethylamino)-4'-morpholinobutyrophenone |
| D 1173 | 2-hydroxy-2-methylpropiophenone |
| TZT | blend of trimethylbenzophenone and methylbenzophenone (SarCure SR1137 from Sartomer) |
| KS300 | 1-hydroxycyclohexylphenyl ketone (SarCure SR1122) |
| ITX | isopropyl thioxanthone (SarCure SR1124 from Sartomer) |
| I-819 | Irgacure 819 phosphine oxide photoinitiator (Ciba Specialty Chemicals) |
| T-292 | Tinuvin 292 hindered amine light stabilizer (Ciba Specialty Chemicals) |
| KIP 150 | Oligo [2-hydroxy-2-methyl-1-[4-(1-methylvinyl)phenyl]propanone] (Lamberti) |
| Ebecryl P104 | UCB Ebecryl P104, an oligomer acrylate tertiary amine from UCB Radcure, Smyrna, Ga. which acts as a photoactivator |
| Additives | |
| G-16 | Genorad-16 (stabilizer) |
| G01-402 | Thermal stabilizer available from Rahn |
| HQ | Hydroquinone (stabilizer) |
| MeHQ | Methyl ether of hydroquinone (4-methoxyphenol) |
| I-1035 | Irganox 1035 (stabilizer) |
| PTM | pentaerythritol tetramercapto propionate |
| BYK 111 | Wetting and dispersing additive |
| BYK 381 | Anionic polyacrylate copolymer leveling agent |
| BYK 3500 | Silicone surfactant |

(continued)

| Pigments and pigment dispersions* | |
|---|---|
| Cyan Pigment | Pigment Blue 15:4 |
| Magenta Pigment | Pigment Red 122 |
| Yellow Pigment | Pigment Yellow 180 |
| Black Pigment | Pigment Black 7 |
| Dispersion A | 10% pigment dispersion in tripropylene glycol diacrylate (TPGDA) |
| Dispersion A1 | 16% pigment dispersion in TPGDA |
| Dispersion B | 30% pigment dispersion in TPGDA |
| Dispersion C | 10% $TiO_2$ pigment dispersion in 35% hyperbranched oligomer CN2300 and 65% SR9003 |
| Dispersion D | 15% $TiO_2$ pigment dispersion in TPGDA |
| Dispersion E | 15 % $TiO_2$ pigment dispersion in TPGDA |
| Component | Name |
| UV-B12-1 | Blue (Cyan) dispersion using CI Pigment B15-3 |
| Dispersion F | 40% $TiO_2$ dispersion in 30% CN 2302 and 70% TPGDA |
| Dispersion G | 40% $TiO_2$ dispersion in TPGDA |
| Dispersion H | 40% $TiO_2$ dispersion in CN 2302 and 70% SR 9003 |
| Dispersion I | 15% $TiO_2$ in TPGDA |
| Dispersion J | 60% $TiO_2$ in TPGDA |
| Dispersion K | 60% $TiO_2$ in TPGDA |
| Dispersion L | 60% $TiO_2$ in TPGDA |
| Dispersion M | 60% $TiO_2$ in TPGDA |
| Dispersion N | 70% $TiO_2$ in TPGDA |
| Dispersion O | 30% $TiO_2$ in TPGDA |

The inkjet ink formulations used in Examples 1-7 are shown in Tables 2 and 3, and have five different colors: cyan, magenta, yellow, black, and white. The pigment particles used are all sub-micrometer.

Table 2.

| Components | 1[a] | 2[a] | 3[a] | 4[b] | 5[c] |
|---|---|---|---|---|---|
| SR 9003 | 2.9 | 0.9 | 36.23 | 33.08 | 2.9 |
| CN383 | 10 | 10 | 10 | 10.67 | 10 |
| SR494 | 10 | 10 | 10 | 10.67 | 10 |
| SR212 | 10 | 10 | 10 | 10.67 | 10 |
| SR256 | 2.5 | 2.5 | 2.5 | 2.67 | 2.5 |
| CD9087 | 2.5 | 2.5 | 2.5 | 2.67 | 2.5 |
| I-369 | 4.0 | 4.0 | 4.0 | 4.27 | 4.0 |
| D 1173 | 3.5 | 3.5 | 3.5 | 3.73 | 3.5 |
| TZT | 3.0 | 3.0 | 3.0 | 3.2 | 3.0 |
| G-16 | 0.1 | 0.1 | 0.1 | 0.1 | 0.1 |
| KS300 | 1.0 | 1.0 | 1.0 | 1.07 | 1.0 |
| ITX | 0.5 | 0.5 | 0.5 | 0.53 | 0.5 |
| PTM | -- | 2.0 | -- | -- | -- |
| TPGDA | -- | -- | -- | -- | 24 |
| Pigment Dispersion A | 50 | 50 | -- | -- | 26 |
| Pigment Dispersion B | -- | -- | 16.67 | 16.67 | -- |
| [a] Cyan, Magenta, Yellow, Black, White [b] White [c] Black | | | | | |

Table 3.

| Components | 6[a] | 7[a] | 8[a] | 9[b] | 10[c] |
|---|---|---|---|---|---|
| SR 9003 | 2.9 | 2.9 | 2.9 | 2.9 | 2.9 |
| CN383 | 10 | 10 | 10 | 10 | 10 |
| SR494 | 10 | 10 | 10 | 10 | 10 |
| SR212 | 10 | 10 | 10 | 10 | 10 |
| SR256 | 2.5 | 2.5 | 2.5 | 2.5 | 2.5 |
| CD9087 | 2.5 | 2.5 | 2.5 | 2.5 | 2.5 |
| I-369 | 4.0 | 4.0 | 4.0 | 4.0 | 4.0 |
| D 1173 | 3.5 | 3.5 | 3.5 | 3.5 | 3.5 |
| TZT | 3.0 | 3.0 | 3.0 | 3.0 | 3.0 |
| G-16 | 0.1 | 0.1 | 0.1 | -- | -- |
| HQ | -- | -- | -- | 0.1 | 0.1 |
| I-1035 | -- | -- | -- | 1.0 | 1.0 |
| KS300 | 1.0 | 1.0 | 1.0 | 1.0 | 1.0 |
| ITX | 0.5 | 0.5 | 0.5 | 0.5 | 0.5 |
| Pigment Dispersion C | 50 | -- | -- | -- | -- |
| Pigment Dispersion D | -- | 50 | -- | -- | -- |

(continued)

| Components | 6[a] | 7[a] | 8[a] | 9[b] | 10[c] |
|---|---|---|---|---|---|
| Pigment Dispersion E | -- | -- | 50 | -- | -- |
| Pigment Dispersion A and A1 | -- | -- | -- | 49 | 26 |
| TPGDA | -- | -- | -- | -- | 24 |
| [a] White [b] Cyan, magenta, yellow [c] Black | | | | | |

Examples 1-3.

Experiments were conducted on cyan, yellow, and black inks to determine the window of reliable printing conditions. Table 4 provides the viscosity and surface tension of the inks of Formulations 1 and 5 from Table 2.

Table 4.

| Ink (color, formulation) | Viscosity at 25°C (cP) | Surface tension (dynes/cm) |
|---|---|---|
| Example 1, Cyan, Formulation 1 | 24.6 | 32.0 |
| Example 2, Yellow, Formulation 1 | 24.3 | 35.0 |
| Example 3, Black, Formulation 5 | 24.0 | 35.0 |

Testing was performed using an Apollo Printhead Support Kit (PSK) system in conjunction with a Spectra Nova Class 256/80 print head to determine physical properties, printing reliability, temperature-voltage operating window, and jet break up. From these results, the optimum printing conditions for the ink were determined.

To determine the window of reliable operation for each ink formulation, each ink was tested over a wide range of parameters. Table 5 provides the operating parameters that were kept constant and those that were varied (temperature and voltage).

Table 5.

| Parameter | Setting |
|---|---|
| Temperature | 30 - 70 °C |
| Voltage | 80 - 140 Volts |
| Frequency | 16 kHz |
| Meniscus vacuum | 3.9 inches $H_2O$ |
| Pulse rising and falling edge | 2.00 microseconds ($\mu$s) |
| Pulse length | 5.00 $\mu$s |
| Lung vacuum | 20.0 inches Mercury (Hg) |
| Image | 100% fill |
| Cure Dose ("D" Fusion bulb) | 265-335 mJ/cm$^2$ |

The reliability of the ink was investigated over a range of voltages and temperature, with a pass/fail result assigned for each set point. The pass/fail criteria used was the loss of 10 or more nozzles over a five-minute jetting period. Tables 6a-6c. show the data for Example 1, the cyan ink indicating the number of nozzles lost at the indicated temperature and voltage. The cyan ink primed and purged well through the print head.

Table 6a.

| Voltage (V) | Temperature (°C) | | | | | | |
|---|---|---|---|---|---|---|---|
| | 30 | 32 | 34 | 36 | 38 | 40 | 42 |
| 90 | | 128 | 128 | 8 | 0 | 9 | 9 |
| 100 | | 128 | 6 | | 1 | | 0 |
| 110 | 64 | 8 | | | 0 | | 1 |
| 120 | 128 | 9 | 5 | 2 | 4 | | 3 |
| 130 | 128 | 128 | 6 | | 1 | | 1 |
| 140 | | 128 | 8 | | 1 | 2 | |

Table 6b.

| Voltage (V) | Temperature (°C) | | | | | | |
|---|---|---|---|---|---|---|---|
| | 44 | 46 | 48 | 50 | 52 | 54 | 56 |
| 90 | 4 | 4 | 3 | 3 | | 6 | 20 |
| 100 | | | 8 | | | | 6 |
| 110 | | | | | 3 | | 4 |
| 120 | | | 3 | 7 | 2 | 9 | 6 |
| 130 | | 9 | | 8 | | | 3 |
| 140 | 6 | 3 | | | | | 3 |

Table 6c.

| Voltage (V) | Temperature (°C) | | | | | | |
|---|---|---|---|---|---|---|---|
| | 58 | 60 | 62 | 64 | 66 | 68 | 70 |
| 90 | | 32 | | 64 | | | |
| 100 | 6 | 2 | | 6 | | 9 | 12 |
| 110 | | 5 | | | 8 | 9 | 19 |
| 120 | 9 | 8 | | | | 2 | 12 |
| 130 | | 2 | | | 4 | 3 | 12 |
| 140 | | 4 | 3 | | 5 | 2 | 18 |

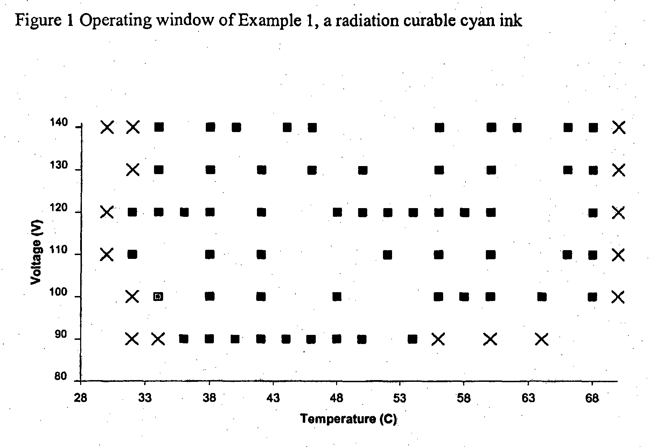

Figure 1 graphically illustrates the results from Tables 6. As shown, the cyan ink provides a very large window of reliable printing. The region for reliability is between 34 and 68°C and 100 to 140 volts.

Example 2 is a yellow radiation curable ink that also primed well into the print head and through the system. Tables 7a and 7b illustrate the number of nozzles lost in the testing.

Table 7a.

| Voltage (V) | Temperature (°C) | | | | | | | |
|---|---|---|---|---|---|---|---|---|
| | 32 | 35 | 40 | 45 | 48 | 50 | 54 | 55 |
| 90 | 7 | 1 | 6 | 4 | | 0 | | 3 |
| 100 | | | | | | | | |
| 110 | | | | | 0 | | | |

(continued)

| Voltage (V) | Temperature (°C) | | | | | | | |
|---|---|---|---|---|---|---|---|---|
| | 32 | 35 | 40 | 45 | 48 | 50 | 54 | 55 |
| 120 | 3 | | | | | | | |
| 130 | | | 2 | | | | | |
| 140 | 2 | 3 | | 6 | | 1 | | 0 |

Table 7b. Cont.

| Voltage (V) | Temperature (°C) | | | | | | | |
|---|---|---|---|---|---|---|---|---|
| | 56 | 58 | 60 | 62 | 64 | 66 | 68 | 70 |
| 90 | | | 0 | 2 | 6 | 6 | | 2 |
| 100 | | | 3 | 2 | | 4 | | |
| 110 | 1 | 8 | 6 | | | 0 | 0 | 1 |
| 120 | | | | | | 0 | | |
| 130 | | | | | | | | |
| 140 | | | | | 7 | | | 3 |

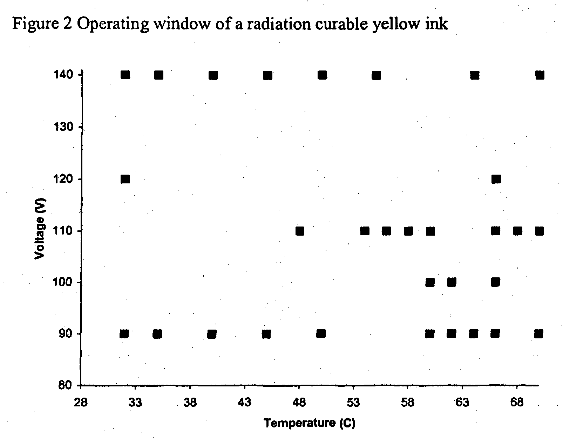

Figure 2 illustrates the reliable operating window of the yellow ink showing, under all the parameters tested, no failures were observed.

Example 3, a black ink, was found to load into the print head easily and found to prime well. The reliability testing results are given in Tables 8a and 8b below.

Table 8a.

| Voltage (V) | Temperature (°C) | | | | | | | | |
|---|---|---|---|---|---|---|---|---|---|
| | 32 | 36 | 38 | 40 | 44 | 46 | 48 | 50 | 52 |
| 90 | 7 | 3 | 2 | | | 0 | | 1 | |
| 100 | | | | 0 | 2 | | 1 | 0 | |
| 110 | 1 | | 1 | 1 | | | | 2 | 0 |
| 120 | | | | 2 | 3 | | | | 0 |
| 130 | | | | | | | | | |
| 140 | 4 | 2 | | 6 | 6 3 | 3 | | 0 | |

Table 8b.

| Voltage (V) | Temperature (°C) | | | | | | | | |
|---|---|---|---|---|---|---|---|---|---|
| | 54 | 56 | 58 | 60 | 62 | 64 | 66 | 68 | 70 |
| 90 | 1 | | | 7 | | 0 | 0 | | 3 |
| 100 | 0 | | 6 | | | 0 | 2 | 2 | |
| 110 | | 2 | 0 | | | 0 | | | 5 |
| 120 | | | 5 | 3 | | | 6 | | |
| 130 | | 8 | | | 5 | | | | |
| 140 | 8 | 6 | 6 | | 4 | | 2 | | 7 |

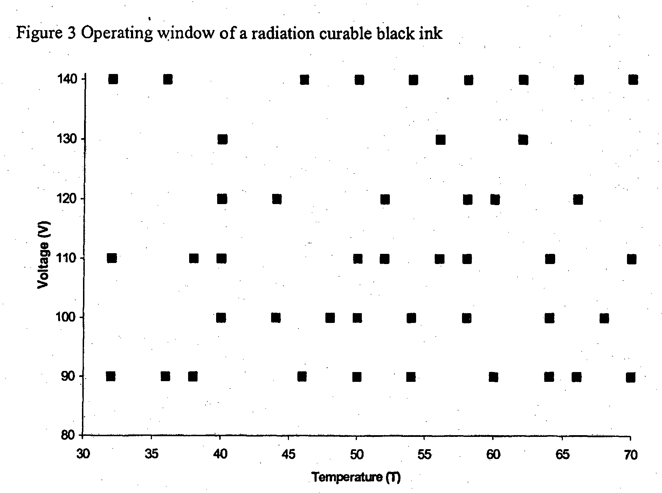

From the results in Tables 8, Figure 3 was prepared, illustrating the reliable operating window of the black ink of Example 3. The black ink was reliable over all parameters tested and gave no failure points.

Droplet formation of Examples 1-3 were also investigated by examining the quality of drop break up and satellite formation using an Optica instrument system available from Xennia Technology Ltd. The Optica instrument uses a high definition CCD camera and strobe arrangement to allow for jet and droplet visualization as the drop is ejected from the faceplate. An individual nozzle of the faceplate ejecting droplets over a range of strobe delays is examined, where the strobe delay corresponds to time elapsed after droplet ejection. The images were captured while printing from a solid block image and not a stochastic image as the stochastic image has a random firing pattern.

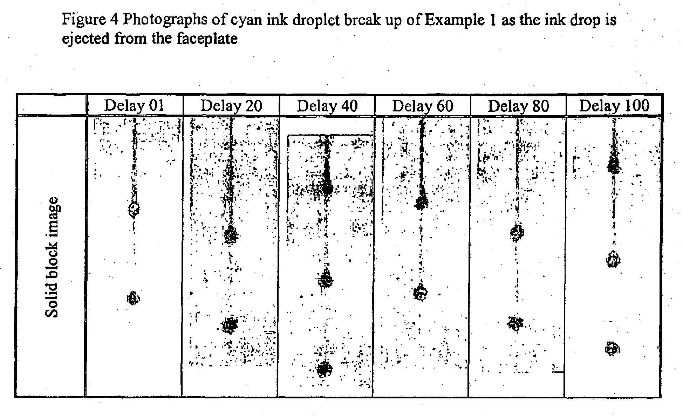

Figure 4 illustrates the results of the cyan ink of Example 1. The cyan ink formulation of Example 1 was observed to have thinner, straighter ligaments, and a rounder, better defined droplet, achieving break off than the Comparative Example ink.

The Optica images of droplet break up for the yellow (Example 2) and black ink (Example 3) were very similar to those of the cyan ink.

Examples 4-6.

The stability of the white inks of Formulations 6-8 of Table 3, using titanium dioxide ($TiO_2$) pigment dispersions, was determined by visual inspection of the samples for settling or separation. Each formulation was poured into a clear glass tube and stored upright at ambient temperature and in the dark. Settling was measured by visually observing changes in transparency and color of the liquid at the top of the tube. All three formulations maintained dispersion visually for 25 days. After 25 days separation was beginning to be observed at the top of the sample tubes.

Example 7.

Measured particle sizes for yellow, magenta (2 formulations), cyan, and white inks formulated in accordance with the present invention are shown in Table 8. The particle sizes were determined using a Zetasizer Nano Series Instrument manufactured by Malvern Instruments using a 633 nm He-Ne laser to determine particle sizes via Dynamic Light Scattering. The relative intensity of the scattered light creates light intensity distributions, which allow particle size measurements to be performed. Samples were prepared by diluting by a factor of 1000 with TPGDA. Table 9 provides the D50, full width at half maximum (FWHM) of the peak, minimum, maximum, and range.

Table 9.

| Inks | D50 (nm) | FWHM (nm) | Minimum (nm) | Maximum (nm) | Range (nm) |
|---|---|---|---|---|---|
| Yellow | 186 | 47.5 | 91 | 342 | 251 |
| Magenta 02 | 135 | 56.6 | 59 | 396 | 337 |
| Magenta 03 | 112 | 45.6 | 44 | 295 | 251 |
| Cyan | 129 | 40.8 | 68 | 295 | 227 |
| White | 159 | 45.1 | 79 | 342 | 263 |
| Black | 131 | 47.2 | 59 | 342 | 282 |

From Table 9, it can be seen that the particle sizes of the pigments dispersed in the inks is uniformly less than 500 nm, and have a D50 of less than 200 nm.

Example 8.

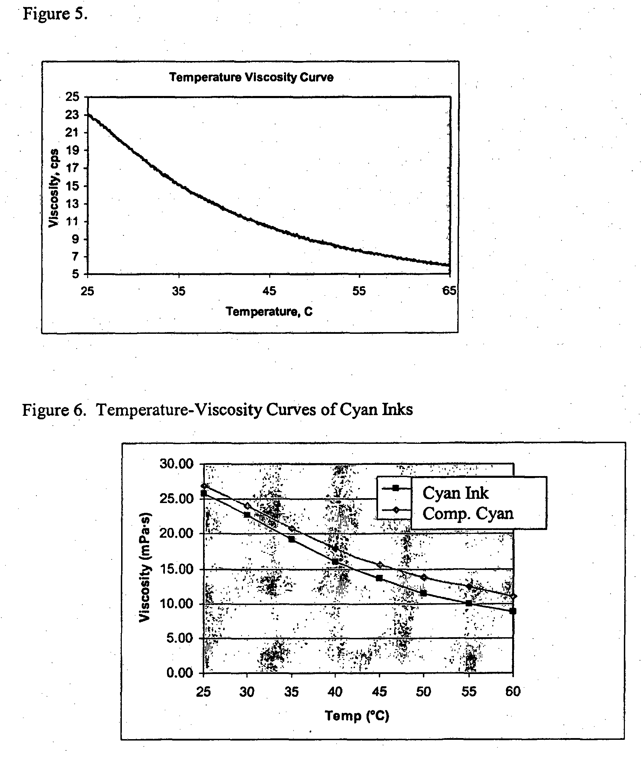

The viscosity of ink formulations as a function of temperature was measured using a RotoVisco 1 rheometer equipped with a cone and plate. For the temperature viscosity curves, a constant shear rate of 500 s$^{-1}$ was maintained and the viscosity was measured as the temperature of the sample was increased from 24°C to 70°C over a time span of 20 minutes. A graphical representation of the data for ink formulation 1 is provided in Figure 5, a plot of viscosity versus temperature. The ink shown in Figure 5 shows a nonlinear decay of viscosity with increasing temperature; representative values from the plot above are tabulated in Table 10.

Table 10.

| Temperature (°C) | Viscosity (cP) |
|---|---|
| 25 | 23.0 |
| 35 | 15.1 |
| 45 | 10.4 |
| 55 | 7.6 |
| 65 | 5.9 |

As illustrated in Table 10, the viscosity is at an optimum value at the operating temperature of 45°C within the range of 10-14 cP.

Example 9.

Activation energy of fluidization (AEF) was obtained as follows. Temperature-viscosity curves of the ink formulations were obtained using a Haake RV-1 rheometer from 25°C to 70°C. All the viscosity measurements at a given temperature were averaged to get the viscosity for that temperature. The viscosities at 25°, 30°, 35°, 40°, 45°, 50°, 55°, and 60°C were used to calculate the activation energy of fluidization. The relationship between the viscosity of an ink and temperature can be illustrated in the form of an Arrhenius equation $\ln \eta = \ln A + (E/R)*(1/T)$ where $\eta$ is viscosity, R is the gas constant (8.3 kJ/mol-K), T is the temperature in degrees K, and E is the activation energy of fluidization in kJ/mol.
The activation energies of fluidization for several ink formulations of Table 2b and comparative ink formulations are shown in Table 11.

Table 11.

| Color | Formulations | | Comparative formulations | |
|---|---|---|---|---|
| | E (kJ/mol) | $\eta$ (mPa.s) at 45°C | E (kJ/mol) | $\eta$ (mPa.s) at 45°C |
| Formulation 9 | | | | |
| Cyan | 26.1 | 13.6 | 21.4 | 15.5 |
| Magenta | 23.8 | 16.3 | 19.2 | 21.2 |
| Yellow | 24.8 | 14.1 | 23.3 | 18.9 |
| Formulation 10 | | | | |
| Black | 26.3 | 12.1 | | |
| White | 28.5 | 13.7 | | |

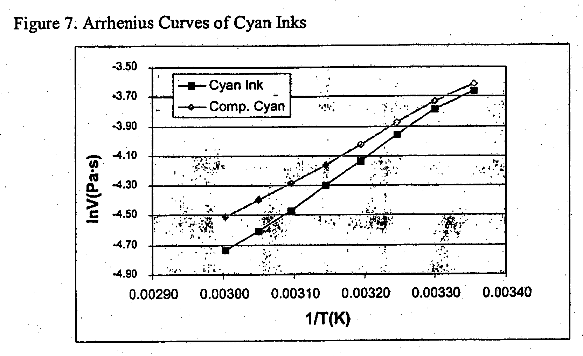

Illustrated in Figure 7 is $\ln \eta$ is plotted versus 1/T and the slope of the line is E/R.

Example 10.

Inkjet inks formulated in accordance with the invention were tested for stability with respect to precipitate formation at elevated temperatures (60°C) for an extended time, from 3 hours to 9 days. The inks were tested for the appearance of suspended particles using a Turbiscan LabExpert Sedimentometer measuring backscattered light using a wavelength of 880 nm over a range of backscattering foci from about 5 mm to about 45 mm, at intervals of 3 hours, 19.5 hours, 2 days, 6 days, and 9 days. Essentially no differences were seen in the overlaid plots, each of which showed 45% backscattering over the range of foci. The overlay of the profiles matched nearly identically, indicating that essentially no agglomeration of particles occurs over time.

Example 11.

Ink formulations in accordance with the invention were coated on different plastic substrates and assessed for relative performance with respect to scratch or abrasion resistance, resistance to cracking during flexing of the substrate, adhesion to the substrate, and solvent wipe resistance (using ethanol as a solvent). These end user properties were assessed using the following scale: 5 = no effect on the ink after curing (best performance), 1 = most or all of the ink was removed by the test (worst performance) The numbering system is as follows:

5 = 0% of the ink was removed by the test
4 = 1-25% of the ink was removed by the test
3 = 26-50% of the ink was removed by the test
2 = 51-75% of the ink was removed by the test
1 = 76-100% of the ink was removed by the test

For the scratch test, the coated substrate was scratched 5 times with a fingernail in one spot and then the sample was assessed.

Flex testing was performed by flexing the print in the same location 20 times and then assessing the sample.

The adhesion test consisted of applying adhesive (Scotch®) Magic tape to the surface, smoothing it across, and then quickly and uniformly removing it.

For the wipe test, an ethanol soaked tissue paper was wiped across the surface 10 times with moderate pressure and then the sample was assessed.

Results are shown in Table 12.

Table 12.

| Plastic Substrate | Scratch | Flex | Adhesion | Solvent Wipe |
|---|---|---|---|---|
| Melinex Polyester | 5 | 5 | 5 | 5 |
| Vinyl | 5 | 5 | 5 | 4 |
| Untreated Polyethylene | 2 | 4 | 3 | 4 |
| Corona Treated Polyethylene | 3 | 5 | 4 | 4 |

Example 12.

The color space values for formulations 9 and 10 of Table 2b were determined using an SF600 Plus-CT Spectraflash colorimeter from Datacolor International on drawdowns that were prepared with a #3 Mayer rod on polyester. Table 13 shows the complete L*a*b*C*h° values for each color. Hue (h°) is how an object's color is perceived (red, blue, yellow, green, green-yellow, etc.). Chroma (C*) describes the vividness or dullness of a color (how close the color is to gray or the pure hue). Lightness (L*) is the luminous intensity of a color. The a* value denotes the red/green of a color (more positive values indicate a more red color, negative values indicate a more green color). The b* value denotes the yellow/blue of a color (more positive values indicate a more yellow color, negative values indicate a more blue color).

Table 13.

| | L* | a* | b* | C* | h° |
|---|---|---|---|---|---|
| Black | 35.65 | 2.24 | 14.01 | 14.19 | 80.93 |
| Magenta | 55.08 | 56.00 | -19.70 | 59.37 | 340.62 |
| Yellow | 81.82 | -7.44 | 88.11 | 88.42 | 94.83 |
| Cyan | 55.41 | -49.67 | -32.51 | 59.36 | 213.21 |

Example 13. Use of a multifunctional thiol compound

The addition of pentaerythritol tetramercapto propionate (PTM) to an ink is used to explore the effect of the multifunctional thiol compound to the ink's performance properties. Table 14 provides two inkjet inks containing the multifunctional thiol compound as well as two inks free of thiol compounds.

Table 14.

| Formulation | 14-1 | 14-2 | 14-3 | 14-4 |
|---|---|---|---|---|
| SR 9003 | 31.00 | 31.00 | 0.90 | 2.90 |

(continued)

| Formulation | 14-1 | 14-2 | 14-3 | 14-4 |
|---|---|---|---|---|
| CN 383 | 10.00 | 10.00 | 10.00 | 10.00 |
| SR 494 | 10.00 | 10.00 | 10.00 | 10.00 |
| SR 212 | 10.00 | 10.00 | 10.00 | 10.00 |
| SR 256 | 2.50 | 2.50 | 2.50 | 2.50 |
| CD 9087 | 2.50 | 2.50 | 2.50 | 2.50 |
| Irgacure 369 | 4.00 | 4.00 | 4.00 | 4.00 |
| KIP 150 | 3.50 | 3.50 | 3.50 | 3.50 |
| TZT | 3.00 | 3.00 | 3.00 | 3.00 |
| KS 300 | 1.00 | 1.00 | 1.00 | 1.00 |
| ITX | 0.50 | 0.50 | 0.50 | 0.50 |
| G01-402 | - | - | 0.10 | 0.10 |
| UV-B12-1 | 20.00 | 20.00 | - | - |
| Cyan pigment dispersion | - | - | 50.00 | 50.00 |
| PTM | 0.00 | 5.00 | 2.00 | 0.00 |
| Total | 98.00 | 103.00 | 100.00 | 100.00 |

Both sets of formulations were prepared into inks and observed for relative cure rates. Draw downs of 14-1 and 14-2 were prepared on a grind gauge and cured at different doses ranging from 300 to 100 mJ/cm$^2$ using the 300 watt/inch Hanovia mercury vapor electrode lamp. The cured samples were checked for cure by rubbing the surface with a Kimwipe. The formulation containing the PTM cured well at all doses checked. Additionally draw downs on Leneta card with a 0 Mayer rod followed by curing at 300 mJ/cm$^2$ using the same 300 W/inch Hanovia lamp cured well.

Samples of 14-3 and 14-4 cyan inks were jetted using the Xaar XJ500 printhead. Both had good viscosity at printhead operating temperature of 45°C and good surface tension, but the formulation with PTM had better drop breakup and image quality than the ink free of the multifunctional thiol compound. Both had similar adhesion to Melinex, vinyl, and polyethylene and similar stability for 15 days at 60°C. Both inks would cure at between 50-65 m/min belt speeds using a 500W H bulb. As illustrated by the examples, the inkjet inks containing a multifunctional thiol compound provided inks exhibiting improved jetting performance as illustrated drop breakup and image quality.

Example 16.

Several white inks having a urethane acrylate oligomer of different viscosities were prepared according to the formulations in Table 15. The inks of Table 15 were tested for viscosity, opacity, flexibility, and adhesion according to the following procedures.

- Viscosity: The viscosity of the ink was determined using a Haake Roto Visco 1 and a TCP/P - Peltier Temperature Control Unit. The viscosity was obtained at a temperature of 25°C and the results are provided in centipoises (cP).
- Opacity: Opacity was measured according to ASTM D2805 - 96a by preparing drawdowns of the ink using a #6 Mayer rod to obtain a film thickness of about 9 micrometers and curing at 700 mJ/cm$^2$ using the doped mercury lamp.
- Flexibility: Test specimens were prepared using a polycarbonate substrate, a coating thickness as provided by a drawdown of the ink using a #6 Mayer rod, and curing at a dose of 0.7 J/cm$^2$ using a mercury (Hg) or doped Hg lamp. After cure, the substrate and coating are bent 180 degrees on one side, the crease is tapped to see if any coating flakes off. If nothing flakes, the substrate and coating is bent in the opposite direction 180 degrees and tapped again. The procedure is repeated for 5 times on each side for a total of 10 times. The value prior to which the coating flakes off is recorded. For example if flakes fall off after the 5th bending, the value of 4 is reported. If it does not flake off after bending it 10 times, the value is reported as >10.
- Adhesion: Adhesion of the cured coatings to a variety of substrates was determined according to ASTM Method D 3359 (Test Method B). The ink thickness prior to cure was made by drawdown using a #6 Mayer rod and the resulting film was cured at a dose of 700 mJ/cm$^2$ using a Hg-vapor bulb. The cured ink was conditioned 16 to 24 hours from the time of cure at 25°C ($\pm$ 2°C) in 50% ($\pm$ 5%) relative humidity (RH). The results are provided in Table 15 where 49 indicates all squares are present (good adhesion), 0 indicates all squares were removed from the substrate (poor adhesion).

Table 15.

| Components | 15-1 | 15-2 | 15-3 |
|---|---|---|---|
| VEEA | 34.62 | 34.62 | 34.62 |
| CD560 | 5 | 5 | 5 |
| CN 386 | 5 | 5 | 5 |
| Ebecryl 40 | 5 | 5 | 5 |
| CN966H90 | 8 | - | - |
| CN964 | - | 8 | - |
| CN962 | - | - | 8 |
| 4-methoxyphenol | 0.05 | 0.05 | 0.05 |
| Irganox-1035 | 1 | 1 | 1 |
| Irgacure-819 | 1 | 1 | 1 |
| Darocure 1173 | 1.83 | 1.83 | 1.83 |
| TZT | 1.5 | 1.5 | 1.5 |
| KS300 | 3.17 | 3.17 | 3.17 |
| ITX | 0.5 | 0.5 | 0.5 |
| White Dispersion G | 33.33 | 33.33 | 33.33 |
| Total | 100.00 | 100.00 | 100.00 |
| | | | |
| Property | 15-1 | 15-2 | 15-3 |
| Viscosity Initial | 25.58 | 23.25 | 27.96 |
| $TiO_2$ (%) | 5 | 5 | 5 |
| Opacity | 23.44 | 21.92 | 22.79 |
| Adhesion (PC) | 49 | 49 | 49 |
| Adhesion (PET) | 49 | 49 | 49 |
| Adhesion (Vinyl) | 49 | 49 | 49 |
| Flexibility (PC) | 5 | 5 | 9 |
| Flexibility (PET) | >10 | >10 | >10 |
| Flexibility (Vinyl) | >10 | >10 | >10 |

As illustrated by the data in Table 15, the ink formulations containing the aliphatic polyester based urethane diacrylate oligomer CN962 (viscosity = 58,250 cP at 60°C); CN964 (viscosity = 17,675 cP at 60°C); and CN966H90 (viscosity = 10,970 cP at 60°C) provided inks having good opacity, excellent adhesion to a variety of polymeric substrates and good flexibility on PET and vinyl substrates.

Example 17.

Several white inks were prepared according to the formulations in Table 16 to determine the effect of urethane acrylate oligomers and an optional hyperbranched acrylate oligomer on ink jetting performance, particularly jet operating window.

Jet operating window of the inks was determined according to the following procedure. The inks were jetted over a range of temperatures and voltages using a Spectra SE-128 printhead and an Apollo II PSK unit at a firing frequency of 16 kHz or 32 kHz. The jetting temperature was raised in ten degree intervals from 30 to 70 °C and the voltage (V) was varied from 80 to 140 volts in increments of 10 volts.

The jet stability at the selected firing frequency (16 kHz or 32 kHz) for the entire range of voltages was determined at the following temperature settings: 30, 40, 50, 60, and 70. A rate of "pass" is given if all the nozzles are firing initially and if less than or equal to nine nozzles of a 128 nozzle print head fail after three minutes of continuous jetting. A rating of "fail" is given if all the nozzles do not jet initially even after an initial purge, or if after three minutes of continuous jetting more than nine nozzles (i.e. more than 7% of the total jets) are not firing properly or are extremely deviated from straight.

Table 16

| Formulation | 16-1 | 16-2 | 16-3 | 16-4 | 16-5 | 16-6 | 16-7 |
|---|---|---|---|---|---|---|---|
| VEEA | 36.62 | 32.51 | 28.17 | 32.88 | 29.48 | 38.26 | 33.37 |
| CD560 | 10.01 | 4.78 | 5.03 | 4.98 | 5.08 | 4.45 | 5.06 |
| Ebecryl 40 | 5.00 | 4.78 | 5.03 | 4.98 | 5.08 | 4.45 | 5.06 |
| CN386 | 5.00 | 4.78 | 5.03 | 4.98 | 5.08 | 4.45 | 5.06 |
| | | | | | | | |
| 4-methoxyphenol | 0.05 | 0.05 | 0.05 | 0.05 | 0.05 | 0.04 | 0.05 |
| Irganox 1035 | 1.00 | 0.96 | 1.01 | 1.00 | 1.02 | 0.89 | 1.01 |
| I-819 | 1.00 | 0.96 | 1.01 | 1.00 | 1.02 | 0.89 | 1.01 |
| | | | | | | | |
| Darocure 1173 | 1.83 | 1.75 | 1.84 | 1.82 | 1.86 | 1.63 | 1.85 |
| TZT | 1.50 | 1.44 | 1.51 | 1.49 | 1.52 | 1.33 | 1.52 |
| KS300 | 4.17 | 3.03 | 3.19 | 3.16 | 3.22 | 2.82 | 3.21 |
| ITX | 0.50 | 0.48 | 0.50 | 0.50 | 0.51 | 0.44 | 0.51 |
| Dispersion D | 33.32 | - | 33.54 | 33.20 | 33.88 | 29.66 | 33.71 |
| Dispersion F | - | 35.88 | - | - | - | - | - |
| CN 991 | - | - | 14.09 | - | - | - | - |
| CN962 | - | - | - | 9.96 | - | - | - |
| CN964 | - | - | - | - | 12.20 | - | - |
| CN966H90 | - | 8.61 | - | - | - | 10.68 | - |
| Total | 100.00 | 100.00 | 100.00 | 100.00 | 100.00 | 100.00 | 100.00 |

A graphical representation of the jetting performance of formulations 16-1 (without an oligomer) and 16-2 (containing both a polyester acrylate oligomer, CN966H90, and a polyester acrylate hyperbranched oligomer) at 16 kHz is provided in Table 16b. As shown, formulation 16-2 with the oligomer exhibits a significant jet operating range. It was especially unexpected that the ink would exhibit a broad operating window, even at high temperatures.

Table 16b.

| Temperature (°C) | Operating Window for Formulations (Maximum Volts) | | | | | | |
|---|---|---|---|---|---|---|---|
| | 16-1 | 16-2 | 16-3 | 16-4 | 16-5 | 16-6 | 16-7 (32 KHz) |
| 30 | 110 | 130 | 110 | 130 | 140 | 140 | 140 (100-120) |
| 40 | 110 | 130 | 110 | 130 | 140 | 130 | 140 (80-120) |
| 50 | 100 | 120 | 100 | 110 | 130 | 120 | 130 (80-110) |
| 60 | 90 | 120 | 90 | 100 | 130 | 130 | 120 (90-100) |

(continued)

| Temperature (°C) | Operating Window for Formulations (Maximum Volts) | | | | | | |
|---|---|---|---|---|---|---|---|
| | 16-1 | 16-2 | 16-3 | 16-4 | 16-5 | 16-6 | 16-7 (32 KHz) |
| 70 | 90 | 130 | 90 | 120 | 110 | 130 | 120 (90-110) |

Also provided in Table 16b. are the jetting performance of 16-3 (no urethane diacrylate oligomer), 16-3 (containing CN991), 16-4 (containing CN962), 16-5 (containing CN964), and 16-6 (containing CN966H90). Again, the inks containing urethane diacrylate oligomers exhibited a wider jet operating window than the corresponding ink free of oligomers. Also provided is the jet operating window of Formulation 16-7 at 32 kHz.

Three of the inks in Table 16 were analyzed for activation energy of fluidization: 16-1 (ink without urethane acrylate oligomer), 16-6 (ink with urethane acrylate oligomer) and 16-2 (ink with urethane acrylate oligomer and $TiO_2$ dispersion in blend vehicle derived from CN 2302 and TPGDA). High shear rheology was used to determine the Activation Energy of Fluidization (AEF) of the white inks at different shear rates (up to 170,000 $sec^{-1}$ between 25 to 50°C). High shear rheology provided viscosity flow curves (viscosity versus shear rate plots) between shear rates of 1 ~ 170,000 $sec^{-1}$ at 25°C, 40°C, and 50°C, measured using RS 300 equipped with a parallel 35 mm plate accessory. From the viscosity flow curves AEF values were calculated by plotting ln $\eta$ versus 1 / temperature. The slope E/R provided AEF where $\eta$ is viscosity, R is the gas constant (8.3), T is the temperature in degrees K, and E is the activation energy of fluidization (AEF) in kJ/mol. The corresponding viscosity values were extracted from the viscosity flow curves at 3,500; 10,000; 69,000; and 100,000 $sec^{-1}$ and the AEF values were obtained between the temperatures of 25 to 50°C. The results are shown in Table 17 (shear rate between 3.5 to 100K at 25 to 50 °C)

Table 17.

| Formulation | Type | AEF Range (kJ/mol) | TiO$_2$ Content |
|---|---|---|---|
| 16-1 | No urethane acrylate oligomer | 25.1 - 23.4 | 5 |
| 16-6 | Urethane acrylate oligomer | 27.1 - 24.7 | 5 |
| 16-2 | Urethane acrylate oligomer and TiO$_2$ dispersed in hyperbranched acrylate oligomer | 26.8 - 23.9 | 15 |

Example 19.

Several white inks were prepared and analyzed for pigment settling over time. The formulations of the inks are shown in Table 18.

Table 18

| Formulation | 18-1 | 18-2 | 18-3 | 18-4 | 18-5 |
|---|---|---|---|---|---|
| SR9003 | 26.39 | 19.92 | 13.14 | - | - |
| Ebecryl P104 | 9.96 | 9.96 | 9.96 | - | - |
| SR494 | 9.96 | 9.96 | 9.96 | - | - |
| SR212B | 9.96 | 9.96 | 9.96 | - | - |
| SR256 | 2.49 | 2.49 | 2.49 | - | - |
| CD9087 | 2.49 | 2.49 | 2.49 | - | - |
| HQ | 0.10 | 0.10 | 0.10 | - | - |
| Irganox 1035 | 0.12 | 0.12 | 0.12 | - | - |
| Irgacure 2959 | 5.97 | 5.97 | 5.97 | - | - |
| BYK 111 | - | - | - | 0.3 | - |
| CN 386 | - | - | - | - | 5 |

(continued)

| Formulation | 18-1 | 18-2 | 18-3 | 18-4 | 18-5 |
|---|---|---|---|---|---|
| MeHQ | - | - | - | 0.1 | - |
| Irgacure 819 | 5.97 | 5.97 | 5.97 | 1.5 | 1.5 |
| Darocur 1173 | - | - | - | 3 | 2.5 |
| TZT | - | - | - | 3.5 | 3.5 |
| KS300 | - | - | - | 3.5 | 3.5 |
| ITX | - | - | - | 0.5 | 0.5 |
| White dispersion D | 26.59 | 33.06 | 39.83 | 87.6 | - |
| White dispersion G | - | - | - | - | 83.5 |
| Total | 100 | 100 | 100 | 100.00 | 100.00 |

Settling data was obtained for each white inkjet by monitoring the change in backscattering of the sample as a function of height using a Turbiscan LabExpert sedimentometer. The number of days it takes to settle 5% at room temperature is determined using an accelerated aging/settling study performed at 60 °C. For the data in Table 19, approximately 1 week at 60 °C is equal to 90 days at room temperature. Opacity and settling is shown in Table 19.

Table 19

| Formulation | % TiO2 | Opacity | Time for 5% settling at room temperature (days) |
|---|---|---|---|
| 18-1 | 4 | 18 | 31 |
| 18-2 | 5 | 21 | 28.5 |
| 18-3 | 6 | 26.4 | 35 |
| 20-1 | 10 | 42.0 | 18 |
| 18-4 | 13.14 | 45.9 | 49 |
| 20-4 | 15 | 52.9 | 14 |
| 20-7 | 20 | 64.7 | 16 |
| 18-5 | 33.4 | 68.6 | not measured |

The opacity data of Table 19 shows a diminishing return on opacity above 20 weight% $TiO_2$.

Example 20.

A series of white inkjet inks were prepared to determine the effect of $TiO_2$ loading on the performance of the ink, including curing, opacity and adhesion to substrates upon cure. Additional white inks were prepare and further analyzed for pigment settling over time. The formulations are provided in Tables 20a and 20b.

Table 20a.

| Component | 20-1 | 20-2 | 20-3 | 20-4 | 20-5 | 20-6 | 20-7 | 20-8 | 20-9 | 20-10 | 20-11 | 20-12 |
|---|---|---|---|---|---|---|---|---|---|---|---|---|
| VEEA | 41.82 | 41.82 | 41.82 | 31.07 | 31.07 | 31.07 | 21.27 | 21.27 | 21.27 | - | - | - |
| SR9003 | - | - | - | - | - | - | - | - | - | - | 35.23 | - |
| CD560 | 5.1 | 5.1 | 5.1 | 5.18 | 5.18 | 5.18 | 5.32 | 5.32 | 5.32 | - | - | - |
| SR494 | - | - | - | - | - | - | - | - | - | - | 10 | - |
| SR212 | - | - | - | - | - | - | - | - | - | - | 10 | - |
| SR256 | - | - | - | - | - | - | - | - | - | - | 2.5 | - |

(continued)

| Component | 20-1 | 20-2 | 20-3 | 20-4 | 20-5 | 20-6 | 20-7 | 20-8 | 20-9 | 20-10 | 20-11 | 20-12 |
|---|---|---|---|---|---|---|---|---|---|---|---|---|
| CD9087 | - | - | - | - | - | - | - | - | - | - | 2.5 | - |
| CN386 | 5.1 | 5.1 | 5.1 | 5.18 | 5.18 | 5.18 | 5.32 | 5.32 | 5.32 | 5.0 | - | - |
| CN383 | - | - | - | - | - | - | - | - | - | - | 10 | 10 |
| Ebecryl 40 | 5.1 | 5.1 | 5.1 | 5.18 | 5.18 | 5.18 | 5.32 | 5.32 | 5.32 | - | - | - |
| CN966H90 | 8.15 | 8.15 | 8.15 | 5.18 | 5.18 | 5.18 | - | - | - | - | - | - |
| MeHQ | 0.05 | 0.05 | 0.05 | 0.05 | 0.05 | 0.05 | 0.05 | 0.05 | 0.05 | - | 0.1 | 0.1 |
| Irganox-1035 | 1.02 | 1.02 | 1.02 | 1.04 | 1.04 | 1.04 | 1.06 | 1.06 | 1.06 | - | - | - |
| Irgacure-819 | 1.02 | 1.02 | 1.02 | 1.04 | 1.04 | 1.04 | 1.06 | 1.06 | 1.06 | 1.5 | 1.5 | 1.5 |
| Irgacure 369 | - | - | - | - | - | - | - | - | - | - | 4.0 | 4.0 |
| Darocur 1173 | 1.87 | 1.87 | 1.87 | 1.9 | 1.9 | 1.9 | 1.95 | 1.95 | 1.95 | 2.0 | 2.0 | 2.0 |
| TZT | 1.53 | 1.53 | 1.53 | 1.54 | 1.54 | 1.54 | 1.59 | 1.59 | 1.59 | 2.0 | 2.0 | 2.0 |
| KS300 | 3.23 | 3.23 | 3.23 | 3.28 | 3.28 | 3.28 | 3.37 | 3.37 | 3.37 | 3.0 | 3.0 | 3.0 |
| ITX | 0.51 | 0.51 | 0.51 | 0.52 | 0.52 | 0.52 | 0.53 | 0.53 | 0.53 | 0.5 | 0.5 | 0.5 |
| Dispersion G | 25.5 | - | - | 38.84 | - | - | 53.16 | - | - | - | - | - |
| Dispersion F | - | 25.5 | - | - | 38.84 | - | - | 53.16 | - | - | - | - |
| Dispersion H | - | - | 25.5 | - | - | 38.84 | - | - | 53.16 | - | - | - |
| Dispersion N | - | - | - | - | - | - | - | - | - | 86 | - | - |
| Dispersion O | - | - | - | - | - | - | - | - | - | - | 16.67 | 76.9 |
| Total | 100 | 100 | 100 | 100 | 100 | 100 | 100 | 100 | 100 | 100 | 100 | 100 |

Table 20b.

| Component | 20-13 | 20-14 | 20-15 | 20-16 | 20-17 | 20-18 | 20-19 | 20-20 | 20-21 | 20-22 | 20-23 |
|---|---|---|---|---|---|---|---|---|---|---|---|
| SR238 | - | - | - | - | - | 36.7 | 36.7 | 36.7 | - | - | - |
| SR285 | - | - | - | - | - 15.0 | 15.0 | 15.0 | 15.0 | - | - | - |
| CN386 | 5.0 | 5.0 | 5.0 | 5.0 | 5.01 | 5.0 | 5.0 | 5.0 | 5.0 | 5.0 | 5.0 |
| Ebecryl 40 | - | - | - | - | - | 5.0 | 5.0 | 5.0 | - | - | - |
| CN966H90 | - | - | - | - | - | 5.0 | 5.0 | 5.0 | - | - | - |
| MeHQ | - | - | - | - | - | 0.05 | 0.05 | 0.05 | - | - | - |
| Irganox-1035 | - | - | - | - | - | 0.04 | 0.04 | 0.04 | - | - | - |
| Irgacure-819 | 1.5 | 1.5 | 1.5 | 1.0 | 1.524 | 1.0 | 1.0 | 1.0 | 1.5 | 1.5 | 1.5 |
| Darocur 1173 | - | - | - | - | - | 1.7 | 1.7 | 1.7 | 2.0 | 2.0 | 2.0 |
| TZT | 2.0 | 2.0 | 2.0 | 2.0 | 3.51 | 1.5 | 1.5 | 1.5 | 2.0 | 2.0 | 2.0 |
| KS300 | 3.0 | 3.0 | 3.0 | 2.5 | 3.51 | 3.15 | 3.15 | 3.15 | 3.0 | 3.0 | 3.0 |
| ITX | 0.5 | 0.5 | 0.5 | 0.5 | 0.5 | 0.5 | 0.5 | 0.5 | 0.5 | 0.5 | 0.5 |
| Dispersion G | 86 | - | - | - | - | - | - | - | - | - | - |
| Dispersion F | - | 86 | - | - | - | - | - | - | - | - | - |

(continued)

| Component | 20-13 | 20-14 | 20-15 | 20-16 | 20-17 | 20-18 | 20-19 | 20-20 | 20-21 | 20-22 | 20-23 |
|---|---|---|---|---|---|---|---|---|---|---|---|
| Dispersion H | - | - | 86 | - | - | - | - | - | - | - | - |
| Dispersion D | - | - | - | 87 | - | - | - | - | - | - | - |
| Dispersion J | - | - | - | - | 83.46 | - | - | - | - | - | - |
| Dispersion K | - | - | - | - | - | 25 | - | - | 86 | - | - |
| Dispersion L | - | - | - | - | - | - | 25 | - | - | 86 | - |
| Dispersion M | - | - | - | - | - | - | - | 25 | - | - | 86 |
| Total | 100 | 100 | 100 | 100 | 100 | 100 | 100 | 100 | 100 | 100 | 100 |

Results of the following tests are shown in Tables 20c and 20d.

- MEK Rub test: The MEK (methyl ethyl ketone) rub technique is a method for assessing the solvent resistance of a cured inkjet ink by incorporating ASTM D4752 into ASTM D3732-82. The ink to be cured is applied to a polyester (PET), polycarbonate (PC) or vinyl substrate using #6 Mayer Rod. The coated film was cured at a dose of 700 mJ/cm$^2$ using a Hanovia D iron doped lamp (part No. 6812F431, max power: 300 Watts/inch, operating power 200 Watts/inch lamp at a dose of 700 mJ/cm$^2$) (dosage recorded by PowerMap). Test areas on the ink film surface of at least 2 inches long are selected for testing. The ball end of a hammer wrapped in two thicknesses of cheesecloth is saturated to a dripping wet condition with the MEK. The wet ball end is rubbed across the 2-inch portion of the cured film, one forward and one backward movement constitutes a single rub. The surface is rubbed until the ink has been completely removed from any point along the test area or after 200 MEK rubs, whichever comes first. The number of rubs to expose the substrate is shown in Table 20c.
- Ink particle size: The particle size of the ink was determined by diluting 3 $\mu$L of ink into 10.0 mL of TPGDA in a scintillation vial and measuring the particles using a Malvern Zetasizer.
- Degree of cure: The degree of cure of the ink was determined by measuring percent reacted acrylate (% RAU) of the cured ink using a Nicolet 860 Magna FT-IR bench equipped with a Durasampl IR II ATR (Diamond). A drop of liquid inkjet ink is placed onto the diamond ATR crystal and a spectrum of the unreacted liquid ink is obtained. A cured film of ink is prepared for spectral analysis by forming a film of ink having a thickness of about 7-10 micrometers using #6 Mayer rod drawdowns substrate. The ink film is then cured using a Hanovia iron doped lamp, part No. 6812F431, max power: 300 Watts/inch, operating power 200 Watts/inch lamp at a dose of 150 mJ/cm$^2$. The cured ink film is removed from the substrate and the top surface and the bottom surface of the film (the face adjacent to the substrate) is measured for degree of cure.

The degree of cure at the top surface of the film ("TOP RAU%") is determined by cutting a piece of ink film (about 1/2" X 1/2") and having the top surface of the film face the diamond ATR crystal while a spectrum is obtained.

The degree of cure at the face of the film opposite to the surface (Bottom RAU%) is obtained by facing the bottom surface of the film to the diamond ATR crystal while a spectrum is obtained.

The carbon-carbon bond of the acrylate functionality is observed in the liquid ink at about 810 cm$^{-1}$. The area of the peak is measured starting from about 827 cm$^{-1}$ to 795 cm$^{-1}$. The presence of a peak at 810 cm$^{-1}$ for the cured ink top surface is also measured for surface area according to the procedure for the liquid ink. The area of a peak at 810 cm$^{-1}$ is also obtained for the cured ink bottom surface. The % RAU is then calculated using the formulas below:

$$\text{\% RAU of Top Surface} = [\text{Area 810 cm}^{-1} \text{ top/Area 810 cm}^{-1} \text{ liquid)}] \times 100$$

$$\text{\% RAU of Bottom Surface} = [\text{Area 810 cm}^{-1} \text{ bottom/Area 810 cm}^{-1} \text{ liquid)}] \times 100$$

The degree of cure is calculated using the following formulas:

$$\text{\% cure for Top Surface} = [\ 1-(\ \text{Area 810 cm}^{-1} \text{ top/Area 810 cm}^{-1} \text{ liquid)}] \times 100$$

$$\text{\% cure for Bottom Surface} = [\ 1 - (\text{ Area } 810 \text{ cm}^{-1} \text{ bottom/Area } 810 \text{ cm}^{-1} \text{ liquid})]\ X\ 100$$

Settling data was obtained for each white inkjet ink by monitoring the change in backscattering of the sample as a function of height using a Turbiscan LabExpert sedimentometer. The number of days it takes to settle 5% at room temperature is determined using an accelerated aging/settling study performed at 60 °C. For the data in Tables 20c and 20d, the settling data at 25°C is calculated from data obtained at 60°C using an Arrhenius equation. If the ink is stable for 24 hours at 60°C then its equivalent stability at room temperature is 11 days calculated as follows:

$$[(24) \times 365]\ /\ 772 = 11 \text{ days}$$

The denominator 772 is a factor and is derived as follows)

$$\text{Number of weeks} = 52 \text{ (weeks)} / (Y)^{x}$$

Y is the reaction doubling rate and is equal to a reaction rate at every 8 to 10°C increases by a factor of 1.6 to 2, with an assumption of 2.

x is the aging factor and equals [(Difference of the temperature at which the sample is aged and the ambient temperature) / (10)]
Number of weeks = $52/(2)^{3.5}$ = 4.6 weeks (approximately 32 days = 772 hours), i.e.772 hr at 60°C = 365 days at room temperature.

Table 20c.

| Property | 20-1 | 20-2 | 20-3 | 20-4 | 20-5 | 20-6 | 20-7 | 20-8 | 20-9 | 20-10 | 20-11 | 20-12 |
|---|---|---|---|---|---|---|---|---|---|---|---|---|
| Viscosity/25°C | 30.01 | 29.07 | 31.27 | 33.3 | 33.72 | 34 | 22.1 | 22.94 | 27.91 | 159.3 | 25.08 | 37.26 |
| Viscosity/40°C | - | - | - | - | - | - | - | - | - | 75.99 | - | - |
| Viscosity/45°C | - | - | - | - | - | - | - | - | - | 62.96 | - | - |
| Particle Size (nm) | 271.1 | 245.6 | 253.4 | 273.5 | 216.7 | 240.6 | 255 | 223.3 | 239.2 | - | - | - |
| % TiO2 | 10 | 10 | 10 | 15 | 15 | 15 | 20 | 20 | 20 | 60.2 | 5.0 | 23 |
| Opacity | 42.3 | 41.7 | 42.1 | 53.45 | 53.12 | 52.16 | 64.66 | 63.44 | 66.1 | 75.87 | 19 | 47 |
| Degree of Cure | | | | | | | | | | | | |
| % top (PC) | 96.3 | 99.3 | 97.5 | 98.8 | 98.7 | 99.0 | 99.5 | 99.4 | 99.1 | 96.4 | 100 | 99.94 |
| % bottom (PC) | NM | NM | NM | NM | NM | NM | 94.7 | NM | NM | 89.1 | 99.01 | 95.12 |
| % top (PET) | 96.7 | 97.4 | 97.3 | 99.6 | 98.5 | 98.8 | 99.7 | 99.9 | 99.4 | 96.4 | - | - |
| % bottom (PET) | 87.6 | 90.5 | 85.0 | 96.3 | 96.1 | 93.2 | 97.8 | 94.0 | 95.4 | 89.1 | - | - |
| % top (PET) 300 mJ/cm | - | - | - | - | - | - | - | - | - | 83.1 | - | - |
| % bottom (PET) 300 mJ/cm$^2$ | - | - | - | - | - | - | - | - | - | 66.2 | - | - |
| % top (vinyl) | 98.0 | 97.5 | 97.4 | 99.4 | 98.9 | 99.2 | 99.5 | 99.5 | 99.6 | - | - | - |
| % bottom (vinyl) | 92.4 | NM | NM | NM | NM | 93.0 | 96.8 | 95.5 | 96.2 | - | - | - |
| Adhesion: PC | 49 | 49 | 49 | 49 | 49 | 49 | 6 | 11 | 7 | - | - | - |
| Adhesion: PET | 30 | 7 | 21 | 9 | 3 | 0 | 0 | 0 | 0 | 0 | - | - |
| Adhesion: vinyl | 49 | 49 | 49 | 49 | 49 | 49 | 0 | 0 | 0 | 0 | - | - |
| Flexibility (PC) | >10 | >10 | >10 | >10 | >10 | >10 | 5 | 2 | 4 | - | - | - |
| Flexibility (PET) | >10 | >10 | >10 | >10 | >10 | >10 | >10 | 6 | 4 | 3 | - | - |
| Flexibility (Vinyl) | >10 | >10 | >10 | >10 | >10 | >10 | >10 | >10 | >10 | 10 | - | - |
| MEK rub: PC | 6 | 9 | 8 | 4 | 4 | 5 | 5 | 9 | 7 | | - | - |
| MEK rub: PET | 6 | 6 | 7 | 6 | 8 | 7 | 5 | 8 | 7 | 3 | - | - |
| MEK rub: Vinyl | 5 | 5 | 5 | 8 | 5 | 5 | 3 | 3 | 5 | 3 | - | - |
| Time for 5% settling at 60°C (hours) | - | - | - | - | - | - | - | - | - | gelled | - | - |

32

EP 1 786 877 B1

(continued)

| Property | 20-1 | 20-2 | 20-3 | 20-4 | 20-5 | 20-6 | 20-7 | 20-8 | 20-9 | 20-10 | 20-11 | 20-12 |
|---|---|---|---|---|---|---|---|---|---|---|---|---|
| Equivalent time for 5% settling at 25°C (days) | - | - | - | - | - | - | - | - | - | - | <1 | <1 |

Table 20d.

| Property | 20-13 | 20-14 | 20-15 | 20-16 | 20-17 | 20-18 | 20-19 | 20-20 | 20-21 | 20-22 | 20-23 |
|---|---|---|---|---|---|---|---|---|---|---|---|
| Viscosity/25°C | 40.29 | 98.34 | 78.96 | 17.44 | 61.34 | - | - | - | - | - | - |
| Viscosity/40°C | 24.12 | 51.92 | 41.34 | 11.09 | 31.95 | - | - | - | - | - | - |
| Viscosity/45°C | 20.39 | 44.08 | 35.56 | 8.88 | 25.65 | - | - | - | - | - | - |
| % TiO2 | 33.4 | 33.4 | 33.4 | 13 | 50 | 15 | 15 | 15 | 51.6 | 51.6 | 51.6 |
| Opacity | 72 | 73.4 | 74.5 | 40.6 | 75.2 | - | - | - | - | - | - |
| Degree of Cure | | | | | | | | | | | |
| % top (PC) | 95.5 | 68.4 | 69.1 | 80.1 | 68.1 | | - | - | - | - | - |
| % bottom (PC) | nm | 67.4 | 66.2 | 77.5 | 66 | - | - | - | - | - | - |
| % top (PET) | nm | 99.95 | 99.9 | 99.9 | 99.6 | - | - | - | - | - | - |
| % bottom (PET) | 98.9 | 96.72 | 93.9 | nm | 91.8 | - | - | - | - | - | - |
| % top (PET) 150 mJ/cm$^2$ | 95.5 | 68.4 | 69.1 | 80.1 | 68.1 | - | - | - | - | - | - |
| % bottom (PET) 150 mJ/cm$^2$ | nm | 67.4 | 66.2 | 77.4 | 66 | - | - | - | - | - | - |
| Time for 5% settling at 60°C (hours) | 55 | >13 days | 185 | 12.5 | 295 | 37.6 | 43.5 | 43.5 | 8 days- | 8 days | 102 |
| Equivalent time for 5% settling at 25°C (days) | 29.5 | | 87 | 6 | 139 | 19 | 22 | 22 | | | 48 |

Example 21.

Three formulations of white inks were compared to evaluate the effect of the presence of an aliphatic polyester urethane diacrylate oligomer (CN966 H90) and/or a hyperbranched polyester acrylate oligomer (CN 2302) on ink properties. Formulations and properties are shown in Table 21.

Table 21.

| Components | 21-1 | 21-2 | 21-3 |
|---|---|---|---|
| VEEA | 36.6 | 34.62 | 31.07 |
| CD560 | 10 | 5 | 5.18 |
| CN386 | 5 | 5 | 5.18 |
| Ebecryl 40 | 5 | 5 | 5.18 |
| CN966H90 | - | 8 | 5.18 |
| HQ | 0.1 | - | - |
| MeHQ | - | 0.05 | 0.05 |
| Irganox-1035 | 1 | 1 | 1.04 |
| IRGACURE-819 | 1 | 1 | 1.04 |
| Darocur 1173 | 1.83 | 1.83 | 1.9 |
| TZT (SarCure SR1137) | 1.5 | 1.5 | 1.54 |
| KS300 (SarCure SR1122) | 4.17 | 3.17 | 3.28 |
| ITX | 0.5 | 0.5 | 0.52 |
| Dispersion I | 33.3 | 33.3 | - |
| Dispersion F | - | - | 38.84 |
| Total | 100.00 | 100.00 | 100.00 |
| $TiO_2$ loading (%) | 5 | 5 | 15.53 |
| Property | | | |
| Opacity | 23.2 | 23 | 53 |
| Cure speed (top) | 99.8 | 98.9 | 98.5 |
| Cure speed (bottom)* | 97.6 | 91.5 | 96.1 |
| Adhesion (PC) | 49 | 49 | 49 |
| Adhesion (PET) | 49 | 49 | 3 |
| Adhesion (Vinyl) | 39 | 49 | 49 |
| Flexibility (PC) | >10 | 5 | >10 |
| Flexibility (PET) | >10 | >10 | >10 |
| Flexibility (Vinyl) | >10 | >10 | >10 |
| MEK Rub (PC) | 25 | 30 | 4 |
| MEK Rub (PET) | 28 | 29 | 8 |
| MEK Rub (Vinyl) | 8 | 30 | 5 |
| Time for 5% settling (days at 25°C) | 12 | .18 | 21 |
| * Bottom surface cure speed was measured for films on the substrate, which peels with the tape. | | | |

As can be seen from the results, the ink containing the urethane diacrylate oligomer (21-2) and the ink containing both the urethane diacrylate oligomer and the hyperbranched acrylate oligomer (21-3) exhibited better stability of the

TiO$_2$ dispersion than the ink without either (21-1). Furthermore, the ink containing greater than 15 wt.% TiO$_2$ and the oligomers showed good opacity as well as good cure speed.

Example 22.

The following inks were formulated in accordance with Table 22a. Each of the inks were tested and showed excellent jettability, stability, and other properties.

Table 22a.

| Component | 22-1 | 22-2 | 22-3 | 22-4 |
|---|---|---|---|---|
| SR238 | 59.37 | 59.43 | 58.93 | 58.43 |
| CN386 | 4.63 | 4.63 | 4.63 | 4.63 |
| Irganox 1035 | 0.93 | 0.93 | 0.93 | 0.93 |
| G01-402 | 0.50 | - | 1.00 | 1.00 |
| SR256 | 2.31 | 2.31 | 2.31 | 2.31 |
| CD9087 | 2.31 | - | - | - |
| Irgacure 369 | 3.70 | 3.70 | 3.70 | 3.70 |
| Darocur 1173 | 3.24 | 3.24 | 3.24 | 3.24 |
| TZT | 2.78 | 2.78 | 2.78 | 2.78 |
| HQ | 0.09 | 0.09 | 0.09 | 0.09 |
| KS300 | 0.93 | 0.93 | 0.93 | 0.93 |
| ITX | 0.46 | 0.46 | 0.46 | 0.46 |
| CN966H90 | 7.50 | 6.50 | 6.00 | 6.50 |
| Black pigment dispersion | 11.25 | - | - | - |
| Cyan pigment dispersion | - | 15.00 | - | - |
| Magenta pigment dispersion | - | - | 15.00 | - |
| Yellow pigment dispersion | - | - | - | 15.00 |

Example 23.

White ink formulations with and without a difunctional monomer containing a vinyl ether group and an acrylate group (VEEA) formed into inks and tested, as shown in Table 23a.

Drawdowns on various substrates were performed using a #6 Mayer rod and curing with a Hanovia iron doped lamp, part No. 6812F431, max power: 300 Watts/inch, operating power 200 Watts/inch at a dosage of 700 mJ/cm$^2$. Adhesion, MEK rub, gloss, flexibility, opacity and degree of cure were determined for Formulation 23-1.

Gloss (60°) of samples of cured ink was measured according to ASTM D523 and ASTM D 2457 using a Micro-Tri-gloss Glossmeter (BYK Gardner). Samples were prepared by drawing down the ink using a #6 Mayer rod to obtain films having a thickness of about 9 micrometers. The films were then cured using a dose of about 150 mJ/cm$^2$ using a Hg-vapor lamp. Gloss readings of the cured inks are taken by positioning each sample beneath the glossmeter so that any lines from the drawdown are parallel with the incident and reflected beams. Three readings are taken for each sample and recorded as an average.

Table 23a.

| Formulation | 23-1 | 23-2 | 23-3 | 23-4 | 23-5 | 23-6 |
|---|---|---|---|---|---|---|
| VEEA | - | 32.51 | - | 35.33 | 35.33 | - |
| SR 238 | 25.11 | - | 24.18 | - | - | 24.18 |
| SR 285 | 14.18 | - | 15.0 | - | - | 15.00 |

(continued)

| Formulation | 23-1 | 23-2 | 23-3 | 23-4 | 23-5 | 23-6 |
|---|---|---|---|---|---|---|
| CD560 | 4.73 | 4.78 | - | 4.91 | 4.91 | - |
| Ebecryl 40 | 2.41 | 4.78 | 5.0 | 4.91 | 4.91 | 5.0 |
| CN386 | 4.73 | 4.78 | 5.0 | 4.91 | 4.91 | 5.0 |
| MeHQ | 0.05 | 0.05 | 0.05 | 0.05 | 0.05 | 0.05 |
| Irganox 1035 | 0.91 | 0.96 | 0.4 | 0.98 | 0.98 | 0.4 |
| I-819 | 0.91 | 0.96 | 1.0 | 0.98 | 0.98 | 1.0 |
| Darocur 1173 | 1.71 | 1.75 | 1.7 | 1.80 | 1.80 | 1.7 |
| TZT | 1.41 | 1.44 | 1.5 | 1.47 | 1.47 | 1.5 |
| KS300 | 3.02 | 3.03 | 3.17 | 3.11 | 3.11 | 3.17 |
| ITX | 0.5 | 0.48 | 0.5 | 0.49 | 0.49 | 0.5 |
| Byk 3500 | - | - | - | - | 0.20 | - |
| Dispersion D | - | - | - | 32.72 | 32.72 | - |
| Dispersion H | 35.6 | - | - | - | - | 37.5 |
| Dispersion F | - | 35.88 | 37.5 | - | - | - |
| CN966 H90 | 4.73 | 8.61 | 5.0 | 8.34 | 8.34 | 5.0 |
| Total | 100.00 | 100.00 | 100.00 | 100.00 | 100.20 | 100.00 |
| % TiO$_2$ Loading | 14.2% | | 15 | | | |

To test several of the formulations, drawdowns on various substrates were performed using a #6 Mayer rod and curing with a Hanovia (Union, NJ) Lamp type: Iron doped electrode; Lamp part number: 6812F431; Lamp max power: 300 Watts/inch Operating power for cure 200 Watts/inch) at a dosage of 150,450, and 700 mJ/cm$^2$ as indicated in Table 23b. Adhesion, MEK rub, gloss, flexibility, opacity and degree of cure were determined.

Gloss (60°) of samples of cured ink was measured according to ASTM D523 and ASTM D 2457 using a Micro-Tri-gloss Glossmeter (BYK Gardner). Samples were prepared by drawing down the ink using a #6 Mayer rod to obtain films having a thickness of about 9 micrometers. The films were then cured using a dose of about 700 mJ/cm$^2$ using a Hg-vapor lamp. Gloss readings of the cured inks are taken by positioning each sample beneath the glossmeter so that any lines from the drawdown are parallel with the incident and reflected beams. Three readings are taken for each sample and recorded as an average.

Table 23b.

| Properties | 23-1 | 23-2 | 23-3 |
|---|---|---|---|
| Viscosity at 25°C | 29.4 (cP) | | |
| Opacity | 53.7 | | 54.8 |
| %Cure by FTIR 700 mJ/cm$^2$ | | | |
| Top (PC) | 99.6 | | |
| Bottom (PC) | NM | | |
| Top (PET) | 99 | | 99.66 |
| Bottom (PET) | 92.3 | | 91.01 |
| Top (Vinyl) | 99.1 | | |
| Bottom (Vinyl) | NM | | |
| Degree of cure top (%) | | | |

(continued)

| Properties | 23-1 | 23-2 | 23-3 |
|---|---|---|---|
| 150 mJ/cm$^2$ | | 98.5-99.9 | >99.9 |
| 450 mJ/cm$^2$ | | >99.9 | >99.9 |
| 700 mJ/cm$^2$ | | >99.5 | >99.9 |
| Degree of cure bottom (%) | | | |
| 150 mJ/cm$^2$ | | >86.8 | 78.5-99.7 |
| 450 mJ/cm$^2$ | | 94.3-94.9 | 88.5-99.8 |
| 700 mJ/cm$^2$ | | >98.2 | 90.5-99.8 |
| Adhesion (PC) | 49 | | 49 |
| Adhesion (PET) | 2 | | 0 |
| Adhesion (Vinyl) | 49 | | 49 |
| MEK Rub (PC) | 10 | | 20 |
| MEK Rub (PET) | 9 | | 12 |
| MEK Rub (Vinyl) | 10 | | 30 |
| MEK Rub at different cure dose | | | |
| 150 mJ/cm$^2$ | | 1-2 | 2-4 |
| 450 mJ/cm$^2$ | | 14-24 | 10-12 |
| 700 mJ/cm$^2$ | | 23-40 | 22-40 |
| Flexibility (PC) | 3 | | 8 |
| Flexibility (PET) | >10 | | 0 |
| Flexibility (Vinyl) | >10 | | 10 |
| Gloss (PC) | 89.7 | | 64.1 |
| Gloss (PET) | 90 | | 90.6 |
| Gloss (Vinyl) | 86.9 | | 88.8 |
| NM-not measured, as films did not peel off with the tape. | | | |

The three formulations were analyzed for jet operating window at 16 kHz according to the above procedures. The results are provided in the Table 23c below.

Table 23c.

| Temperature (°C) | Operating Window for Formulations (Maximum Voltage) | | |
|---|---|---|---|
| | 23-1 | 23-2 | 23-3 |
| 30 | 120 | 130 | 130 |
| 40 | 130 | 130 | 130 |
| 50 | 110 | 120 | 130 |
| 60 | 110 | 120 | 120 |
| 70 | 130 | 130 | 120 |

Formulations 23-4 and 23-5 were measured for intercoat adhesion. A drawdown of each formulation was made on a polyvinylchloride substrate using a #6 Mayer rod and cured using a Hanovia iron doped lamp, part No. 6812F431, max power: 300 Watts/inch, operating power 200 Watts/inch at a dose of 700 mJ/cm$^2$. One or more additional drawdowns were made and cured to form a multi-layer coat. Cross-hatch adhesion was then performed on the multi-layer coat. The results of the intercoat adhesion test and gloss are provided in Table 23d.

Table 23d.

| Property | 23-4 | 23-5 | 23-5 |
|---|---|---|---|
| | No surfactant | Byk 3500 | Byk 3500 |
| Layers Coated | 1 | 1 | 3 |
| Gloss | 42.4 (Matte) | 61.7 | 61.6 |
| Adhesion | 49 | 49 | 49 |

Example 14. Adhesion of ink formulations having urethane acrylate oligomer to plastic substrates.

Example 24.

UV Curable inkjet ink Formulations 24-1 and 24-2 were prepared using a urethane acrylate oligomer (CN 966H90), to determine the effect of this oligomer on the adhesion of cyan inks to plastic substrates, as well as the degree of cure, chemical resistance, gloss, and viscosity. The formulations are as shown in Table 24a.

Table 24a.

| Component | 24-1[a] | Comparative 3[a] | 24-2[a] |
|---|---|---|---|
| SR 238 | 25.8 | 33.3 | 28.3 |
| CN386 | 4.6 | 4.6 | 4.6 |
| SR256 | 2.3 | 2.3 | 2.3 |
| CD9087 | 2.5 | 2.5 | 2.5 |
| I-369 | 3.7 | 3.7 | 3.7 |
| D 1173 | 3.2 | 3.2 | 3.2 |
| TZT | 2.8 | 2.8 | 2.8 |
| HQ | 0.1 | 0.1 | 0.1 |
| I-1035 | 0.9 | 0.9 | 0.9 |
| KS300 | 0.9 | 0.9 | 0.9 |
| ITX | 0.5 | 0.5 | 0.5 |
| CN966H90 | 7.5 | - | 5 |
| Cyan Pigment Dispersion | 27.8 | 27.8 | 27.8 |
| VEEA | 17.6 | 17.6 | 17.6 |
| [a]Cyan | | | |

The inks were formulated and their properties compared with Comparative Formulation 3, Comparative Formulation 1 (a commercially available cyan inkjet ink) and Comparative Formulation 2 (a different commercially available cyan inkjet ink). The degree of cure of the ink was determined by measuring percent reacted acrylate (% RAU) of the cured ink using a Nicolet 860 Magna FT-IR bench equipped with a Durasampl IR *II* ATR (Diamond) as described above.

The gloss at 60° is determined according to the method described in ASTM D2457.

Viscosity is determined using a Haake Roto Visco-1 viscometer at 25°C, as described above.

Crosshatch adhesion is determined according to the following procedure. A film of an inkjet ink is prepared at a thickness of 9 micrometers using a #6 Mayer, cured using a mercury vapor lamp at a dose of 700 mJ/cm$^2$, and conditioned for 16-24 hours at 25°C ($\pm$ 2°C), and at a relative humidity of 50% ($\pm$ 5%). A series of 6 parallel incisions of 2 to 2.5 cm in length and spaced 2.0 mm apart is made in the film using a suitable cutting tool such as a Gardco PA-2000 cutting tool with 6 parallel blades, followed by a second set of incisions of the same dimensions and rotated 90° to the first set. In this way a crosshatch pattern is made, and the crosshatched surface is cleaned using a brush or compressed air to remove particulate contaminants. A length of 7 to 8 cm of a suitable tape, such as 3M 610 tape by 3M Corporation, is applied to the crosshatched area and rubbed smoothed out to remove any trapped air bubbles, and to ensure a good contact. The tape is then pulled off within 90 seconds ($\pm$ 30 seconds) upon application to the crosshatched area. The crosshatch areas are then quantified according to the method of ASTM D3359 where "49" refers to the best adhesion and "0" refers to the worst adhesion.

The results are shown in Table 24b.

Table 24b.

| Inks | Degree of cure, % (TOP) | Degree of cure, % (BOTTOM) | MEK rub | Gloss (60 °) | Viscosity (25°C) | Crosshatch | | |
|---|---|---|---|---|---|---|---|---|
| | | | | | | PVC | PC | PET |
| Comp. 3 | 98.3 | 93.5 | 21 | 57 | 10.6 cP | 0 | 7 | 11 |
| Sample 24-2 (5 wt.%) | 99.6 | 95.4 | 19 | 108 | 18.8 cP | 49 | 49 | 42 |
| Sample 24-1 (7.5 wt.%) | 99.5 | 96.2 | 19 | 109 | 23.9 cP | 49 | 49 | 44 |
| Comp. 1 | 99.6 | Not available | 8 | 114 | 34.3 cP | 49 | 49 | 49 |
| Comp. 2 | 97.8 | Not available | >150 | 119 | 21.4 cP | 49 | 49 | 49 |
| *: RAU was measured on PET surface since ink film cannot be peeled from PC and polyvinyl. | | | | | | | | |

As seen in the data, the degree of cure obtained at the top of the printed inkjet inks shows comparable low values for Formulation 24-1 and Comparative Formulation 1. Chemical resistance, as demonstrated using an MEK rub, shows an intermediate performance for each of Formulations 24-1 and Comparative Formulation 3. Gloss performance of Formulation 24-1 is comparable with Comparative Formulations 1 and 2, and significantly higher than the low gloss performance for Comparative Formulation 3. Adhesion of Formulation 24-1 is comparable with Comparative Formulations 1 and 2, and is significantly better than for Comparative Formulation 3. The balance of properties for Formulation 24-1 is therefore better overall than for any one individually of the comparative examples.

The jetting ability of the urethane acrylate oligomer containing formulation (Formulation 24-1) was compared with Comparative Examples 1-3, using the above-described procedure. The inks were jetted over a range of temperatures and voltages using a Spectra SE-128 printhead and an Apollo II PSK unit at a firing frequency of 16 kHz or 32 kHz. The jetting temperature was raised in ten-degree intervals from 30 to 70°C and the voltage (V) was varied from 80 to 140 volts in increments of 10 volts.

The results are provided in Table 24c.

Table 24c

| Temperature (°C) | Operating Window for Formulations (Volts) | | |
|---|---|---|---|
| | Formulation 24-1 | Comparative Formulation 1 | Comparative Formulation 2 |
| 30 | 130 | 130 | - |
| 40 | 130 | 130 | 130 |
| 50 | 120 | 110 | 110 |
| 60 | 120 | 110 | 100 |
| 70 | 120 | 100 | 90 |

As seen in the data in Table 24c, the jet operating window for Formulation 24-1 is significantly wider than for either of the comparative formulations, where Comparative Formulation 2 shows the least stability. The decrease in operating voltage indicates a lack of stability of the ink formulation within the printhead at higher voltage and increased temperature, and thus a less robust formulation with smaller jet operating window.

Optical microscopy was performed on films formed from these formulations. In particular, Formulations 24-1 (7.5 wt% urethane acrylate oligomer), 24-2 (5 wt% urethane acrylate oligomer) and Comparative Formulation 3 (0 wt% urethane acrylate oligomer) were coated onto a polycarbonate substrate and cured using a mercury lamp at a dose of

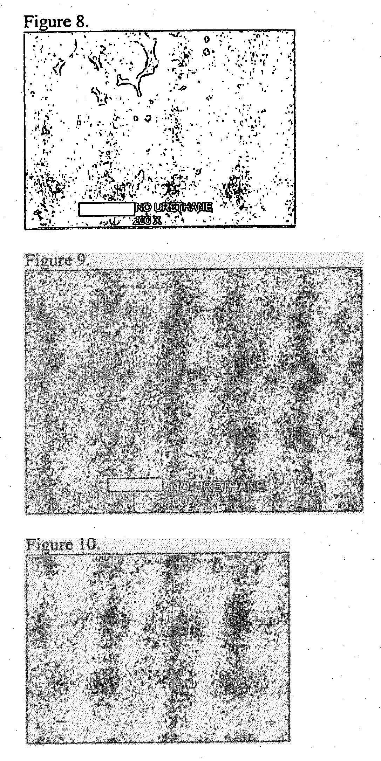

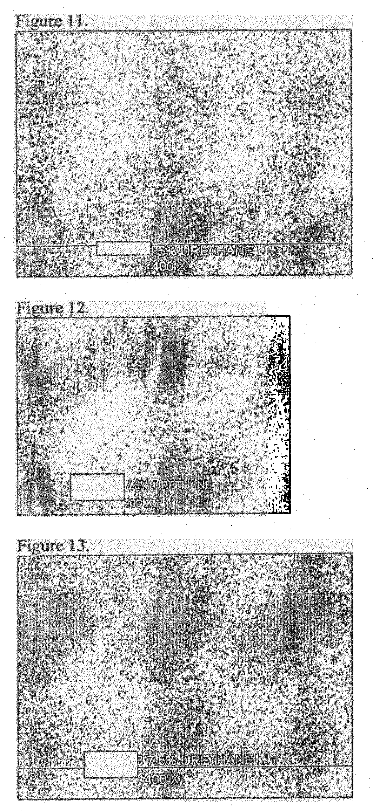

700 mJ/cm$^2$, at room temperature. A comparison of the cured cyan inks using optical microscopy at 200x and 400x magnification is shown in Figures 8 and 9 (Comparative Formulation 3, 200x and 400x magnification, respectively), Figures 10 and 11 (Formulation 24-2, 200x and 400x magnification, respectively) and Figures 12 and 13 (Formulation 24-1, 200x and 400x magnification, respectively).

Figures 8 and 9 show that in a cured film of Comparative Formulation 3, the Benard cells (roughly circular patterns in the film) are of uneven size (Figure 8) toward the top of the image, indicating non-uniform curing, and have gaps between the cells where the cells pulled away from each other upon cure in a phase separation. Figures 10 and 11 (Formulation 24-2, 5 wt% urethane acrylate oligomer) show that the cells, while observable, are significantly more uniformly distributed, with only traces of phase separation (Figure 11, lower right hand corner). Figures 12 and 13 (Formulation 24-1, 7.5 wt% urethane acrylate oligomer) show that the Bénard cells are nearly undetectable, even under 400x magnification (Figure 13), indicating a complete cure with no detectable phase separation. The inkjet ink surface of cured formulation 24-1 is essentially continuous.

Example 25.

Various additives may also be included in the inks of the present invention to promote leveling and wetting. Such additives can affect properties such as surface tension and adhesion of the ink to various substrates. Table 25a contains black ink formulations wherein formulation 25-1 contains no additives, formulation 25-2 contains 0.2 wt% nonionic wetting agent (BYK 3500), and formulation 25-3 contains 0.5 wt% ionic leveling agent (BYK 381).

Table 25a.

| Components | 25-1 | 25-2 | 25-3 |
|---|---|---|---|
| SR 9003 | 2.9 | 2.9 | 2.9 |
| Ebecryl 40 | 10 | 10 | 10 |
| SR256 | 2.5 | 2.5 | 2.5 |
| SR212B | 10 | 10 | 10 |
| CD9087 | 2.5 | 2.5 | 2.5 |
| I-369 | 5 | 5 | 5 |
| D 1173 | 4.5 | 4.5 | 4.5 |
| HQ | 0.1 | 0.1 | 0.1 |
| I-1035 | 1 | 1 | 1 |
| KS300 | 2 | 2 | 2 |
| ITX | 0.5 | 0.5 | 0.5 |
| Black Pigment Dispersion | 26 | 26 | 26 |
| TPGDA | 33 | 33 | 33 |
| BYK 381 | -- | -- | 0.5 |
| BYK 3500 | -- | 0.2 | -- |

Table 25b shows the static surface tension, in dynes per centimeter (dynes-cm$^{-1}$), determined using a Fischer Static Surface Tensiometer for Formulations 25-1 to -3.

Table 25b.

| Formulation | Static Surface Tension (dynes cm$^{-1}$) |
|---|---|
| 25-1 | 37.5 |
| 25-2 | 26 |
| 25-3 | 36 |

The data in Table 25b show that addition of BYK 3500 to the black inkjet ink formulation (25-2) decreases the surface tension of the ink relative to Formulation 25-1 (no leveling agent). However, addition of ionic acrylate surfactant BYK381 has minimal impact on the surface tension of the base ink (25-3).

The adhesion of Formulations 25-1 to -3 was determined according to ASTM D3359 (Method B) using both treated and untreated plastic substrates. The results are shown in Table 25c below.

Table 25c.

| Inks | Crosshatch - Treated** | | | Crosshatch - Untreated** | | |
|------|------|------|------|------|------|------|
| | PVC | PC | PET | PVC | PC | PET |
| 25-1 | Good | Good | Good | Poor | Poor | Poor |
| 25-2 | Good | Good | Good | Good | Good | Good |
| 25-3 | Good | Good | Good | Good | Good | Good |

Adhesion of formulation 25-1 to a treated plastic substrate is significantly better than the adhesion to an untreated substrate. Formulations 25-2 and 25-3 each show good adhesion to all plastic substrates, proving the usefulness of both leveling and wetting agents as additives in the inkjet inks of this invention.

Example 26.

Activation energies of fluidization (AEF) were determined for the ink formulations in Tables 26a and 26b (Note: 26-1 to 26-3 are identical to Formulation 9, above). Comparative data using commercially available inkjet inks (Comparative Formulations CF 1-8) are included with the data in Table 26c, below.

Table 26a.

| | 26-1 | 26-2 | 26-3 | 26-4 | 26-5 | 26-6 | 26-7 | 26-8 | 26-9 | 26-10 |
|------|------|------|------|------|------|------|------|------|------|-------|
| SR9003 | 2.9% | 2.9% | 2.9% | 2.9% | 2.9% | 2.9% | 2.9% | 2.9% | 2.9% | 2.9% |
| CN383 | 10% | 10% | 10% | --- | --- | --- | --- | --- | --- | --- |
| CN386 | --- | --- | --- | 10% | 10% | 10% | --- | --- | --- | --- |
| EB 40 | --- | --- | --- | 10% | 10% | 10% | 10% | 10% | 10% | 10% |
| TPGDA | --- | --- | --- | --- | --- | --- | 33% | 6.5% | 29% | 29% |
| SR494 | 10% | 10% | 10% | --- | --- | --- | --- | --- | --- | --- |
| SR212 | 10% | 10% | 10% | 10% | 10% | 10% | 10% | 10% | 10% | 10% |
| SR256 | 2.5% | 2.5% | 2.5% | 2.5% | 2.5% | 2.5% | 2.5% | 2.5% | 2.5% | 2.5% |
| CD9087 | 2.5% | 2.5% | 2.5% | 2.5% | 2.5% | 2.5% | 2.5% | 2.5% | 2.5% | 2.5% |
| I-369 | 4% | 4% | 4% | 4% | 4% | 4% | 5% | 5% | 5% | 5% |
| D-1173 | 3.5% | 3.5% | 3.5% | 3.5% | 3.5% | 3.5% | 4.5% | 4.5% | 4.5% | 4.5% |
| TZT | 3% | 3% | 3% | 3% | 3% | 3% | 0% | 0% | 0% | 0% |
| HQ | 0.1% | 0.1% | 0.1% | 0.1% | 0.1% | 0.1% | 0.1% | 0.1% | 0.1% | 0.1% |
| I-1035 | 1% | 1% | 1% | 1% | 1% | 1% | 1% | 1% | 1% | 1% |
| KS300 | 1% | 1% | 1% | 1% | 1% | 1% | 2% | 2% | 2% | 2% |
| ITX | 0.5% | 0.5% | 0.5% | 0.5% | 0.5% | 0.5% | 0.5% | 0.5% | 0.5% | 0.5% |
| T-292 | 0% | 0% | 0% | 0% | 0% | 1% | 0% | 2.5% | 0% | 0% |
| Pigment Dispersion A1 (Cyan) | 49% | --- | --- | 49% | --- | --- | --- | --- | 30% | --- |
| Pigment Dispersion (Magenta) | --- | 49% | A1 --- | --- | 49% | --- | --- | --- | --- | 30% |
| Pigment Dispersion A1 (Yellow) | --- | --- | 49% | --- | --- | 48% | --- | 50% | --- | --- |
| Pigment Dispersion A1 (Black) | --- | --- | --- | --- | --- | --- | 26% | --- | --- | --- |

(continued)

|  | 26-1 | 26-2 | 26-3 | 26-4 | 26-5 | 26-6 | 26-7 | 26-8 | 26-9 | 26-10 |
|---|---|---|---|---|---|---|---|---|---|---|
| TOTAL | 100% | 100% | 100% | 100% | 100% | 100% | 100% | 100% | 100% | 100% |

Table 26b.

| Component | 26-11 | 26-12 | 26-13 | 26-14 | 26-15 | 26-16 |
|---|---|---|---|---|---|---|
| SR238 | 59.37% | 59.43% | 58.93% | 58.43% | 24.2% | 24.2% |
| SR285 | --- | --- | --- | --- | 15.0% | 15.0% |
| CN386 | 4.63% | 4.63% | 4.63% | 4.63% | 5.0% | 5.0% |
| EB 40 | --- | --- | --- | --- | 5.0% | 5.0% |
| I-1035 | 0.93% | 0.93% | 0.93% | 0.93% | 0.4% | 0.4% |
| I-819 | --- | --- | --- | --- | 1.0% | 1.0% |
| G01-402 | 0.50% | 0% | 1% | 1% | --- | --- |
| SR256 | 2.31% | 2.31% | 2.31% | 2.31% | --- | --- |
| CD9087 | 2.31% | 0% | 0% | 0% | --- | --- |
| 1-369 | 3.70% | 3.70% | 3.70% | 3.70% | --- | --- |
| D1173 | 3.24% | 3.24% | 3.24% | 3.24% | 1.7% | 1.7% |
| TZT | 2.78% | 2.78% | 2.78% | 2.78% | 1.5% | 1.5% |
| HQ | 0.09% | 0.09% | 0.09% | 0.09% | --- | --- |
| MeHQ | --- | --- | --- | --- | 0.05% | 0.05% |
| KS300 | 0.93% | 0.93% | 0.93% | 0.93% | 3.17% | 3.17% |
| ITX | 0.46% | 0.46% | 0.46% | 0.46% | 0.5% | 0.5% |
| CN966H90 | 7.5% | 6.5% | 6.0% | 6.5% | 5.0% | 5.0% |
| Pigment Dispersion A1 (Cyan) | --- | 15.000% | --- | --- | --- | --- |
| Pigment Dispersion A1 (Magenta) | --- | --- | 15.000% | --- | --- | --- |
| Pigment Dispersion A1 (Yellow) | --- | --- | --- | 15.000% | | |
| Pigment Dispersion A1 (Black) | 11.2500% | --- | --- | --- | --- | --- |
| Pigment Dispersion F (White) | --- | --- | --- | --- | 37.5% | --- |
| Pigment Dispersion H (White) | --- | --- | --- | --- | --- | 37.5% |
| Total | 100% | 100% | 100% | 100% | 100% | 100% |

Activation energies of fluidization for these formulations were determined using the following method: High shear rheology was performed using RheoStress 300 equipped with 35 mm parallel plate accessory, at shear rates of 1 to 170,000 sec$^{-1}$ and at temperatures of 25, 40, and 50°C. A 0.04 mm gap was maintained between the parallel plates. Four drops of the ink was placed between the two parallel plates and the angular velocity was varied up to 4,500 rpm at constant rate (CR) mode for 30 minutes.

The corresponding viscosity values were extracted from the viscosity flow curves at shear rates of: 3,500; 10,000; 69,000; 100,000; and 150,000 or 170,000 sec$^{-1}$, for each of the above temperatures. Viscosity and temperature for each ink was plotted for a given shear rate using the Arrhenius equation $\ln \eta = \ln A + (E/R)*(1/T)$. A plot of $\ln \eta$ versus 1/T (temperature, in K) provided a slope, which is a measure of E (Activation Energy of Fluidization). AEF values were determined at each shear rate for each formulation using this information. The data are summarized in Table 26c.

EP 1 786 877 B1

Table 26c

| Formulation | Color | UA Present? (Y/N) | AEF kJ/mol (3,500 sec$^{-1}$) | AEF kJ/mol (10,000 sec$^{-1}$) | AEF kJ/mol (69,000 sec$^{-1}$) | AEF kJ/mol (100,00 0 sec$^{-1}$) | AEF kJ/mol (150,00 0 sec$^{-1}$) | AEF kJ/mol (165,00 0 sec$^{-1}$) |
|---|---|---|---|---|---|---|---|---|
| CF. 1 | Black | --- | 46.2 | 46.1 | 44.3 | 44.0 | --- | 42 |
| CF.2 | Black | --- | 51.2 | 51.2 | 50.7 | 50.2 | --- | 49.4 |
| 26-7 | Black | N | 30.9 | 30.7 | 29.1 | 27.6 | --- | 26.3 |
| 26-7 BM[1] | Basemix | N | 31.7 | 31.5 | 31.2 | 30.5 | --- | 29.5 |
| 26-11 | Black | Y | 22.8 | 23.3 | 20.9 | 20.21 | 18.7 | --- |
| CF. 3 | Cyan | --- | 30.2 | 29.4 | 29.6 | 28.7 | --- | 26.5 |
| CF. 4 | Cyan | --- | 30.1 | 30.6 | 29.6 | 29.1 | --- | 28.1 |
| 26-1 | Cyan | N | 30.9 | 30.5 | 27.9 | 27.2 | --- | 24.9 |
| 26-4 | Cyan | N | 30.1 | 30.7 | 25.0 | 22.3 | --- | 20.6 |
| 26-9 | Cyan | N | 32.0 | 32.2 | 30.2 | 28.8 | --- | 28.6 |
| 26-9 BM[1] | Basemix | N | 30.8 | 31.0 | 30.9 | 30.6 | --- | 29.3 |
| 26-12 | Cyan | Y | 25.1 | 225.2 | 23.9 | 22.9 | 22.8 | --- |
| CF.5 | Magenta | --- | 29.7 | 29.7 | 28.0 | 27.4 | --- | 26.1 |
| CF. 6 | Magenta | --- | 28.1 | 27.7 | 28.1 | 27.4 | --- | 27.0 |
| 26-2 | Magenta | N | 31.1 | 30.7 | 28.9 | 27.3 | --- | 25.5 |
| 26-5 | Magenta | N | 28.2 | 27.2 | 25.3 | 24.5 | --- | 23.7 |
| 26-10 | Magenta | N | 32.4 | 31.4 | 30.0 | 28.7 | --- | 27.6 |
| 26-10 BM[1] | Basemix | N | 33.1 | 33.4 | 31.9 | 30.4 | --- | 28.7 |
| 26-13 | Magenta | Y | 23.1 | 22.4 | 21.5 | 21.1 | 19.9 | --- |
| CF. 7 | Yellow | --- | 32.0 | 31.9 | 29.0 | 28.0 | --- | 26.8 |
| CF.8 | Yellow | --- | 30.9 | 31.0 | 30.3 | 29.5 | --- | 28.6 |
| 26-3 | Yellow | N | 33.5 | 33.2 | 30.6 | 29.2 | --- | 26.2 |
| 26-6 | Yellow | N | 31.8 | 32.0 | 30.0 | 27.9 | --- | 24.4 |
| 26-8 | Yellow | N | 32.7 | 33.0 | 31.6 | 30.1 | --- | 26.2 |
| 26-8 BM[1] | Basemix | N | 31.8 | 31.9 | 31.0 | 30.5 | --- | 29.6 |
| 26-14 | Yellow | Y | 25.1 | 24.8 | 25.5 | 24.1 | 22.3 | --- |
| 16-1 | White | N | 25.1 | 24.3 | 24.0 | 23.4 | --- | --- |
| 16-6 | White | N | 27.1 | 26.6 | 25.2 | 24.7 | --- | --- |
| 16-2 | White | N | 26.9 | 26.8 | 24.6 | 23.9 | --- | --- |
| 26-15 | White | Y | 16.9 | 16.4 | 13.5 | 12.1 | --- | --- |
| 26-16 | White | Y | 25.4 | 25.2 | 23.1 | 22.1 | --- | --- |
| [1]BM, also referred to as basemix, is the formulation without added pigment. | | | | | | | | |

Activation energies of fluidization generally decrease as shear rate increases with a more pronounce decrease in AEF at shear rates above about 100,000 sec$^{-1}$, as seen in the data in Table 26c. Of note are the formulations having urethane-acrylate oligomer (UA; Formulations 26-11 through 26-16), which generally have significantly lower AEF values of 12.1 to 25.2 kJ/mol over all measured shear rates, than those of the non-UA containing formulations. For Formulations 26-7, -8, -9, and -10, the AEF for the basemix (i.e., formulation without pigment) is higher than that of corresponding formulation with pigment included. Adding increasing amounts of pigment may also result in a decrease in AEF. The pigmented non-comparative formulations generally have a higher pigment loading than comparative formulations CF 1-8, and also exhibit, along with the unpigmented (basemix) formulations, a lower AEF than the corresponding comparative formulations.

Example 27.

Inkjet ink formulations were prepared for jet operating window evaluation, according to the formulations described in Table 27a, below.

Table 27a.

| Component | 27-1 | 27-2 | 27-3 | 27-4 | 27-5 | 27-6 |
|---|---|---|---|---|---|---|
| SR9003 | 2.87% | 2.90% | 2.87% | 2.90% | --- | --- |
| SR238 | --- | --- | --- | --- | 58.93% | 30.43% |
| SR256 | 2.48% | 2.50% | 2.48% | 2.50% | 2.31% | 2.31% |
| SR212 | --- | 10.00% | --- | 10.00% | --- | --- |
| TPGDA | --- | 29.00% | --- | 33.00 | --- | 4.63% |
| VEEA | --- | --- | --- | --- | --- | 17.58% |
| CD9087 | 2.48% | 2.50% | 2.48% | 2.50% | --- | 2.31% |
| CN386 | 9.90% | --- | 9.90% | --- | 4.63% | --- |
| EB 40 | 9.90% | 10.00% | 9.90% | 10.00% | --- | --- |
| CN966H90 | --- | --- | --- | --- | 6.00% | 7.50% |
| I-1035 | 0.99% | 1.00% | 0.99% | 0.93% | 0.93% | 0.93% |
| G01-402 | --- | --- | --- | --- | 1.00% | --- |
| I-369 | 3.96% | 5.00% | 3.96% | 5.00% | 3.70% | 3.70% |
| D 1173 | 3.47% | 4.50% | 3.47% | 4.50% | 3.24% | 3.24% |
| TZT | 2.97% | --- | 2.97% | --- | 2.78% | 2.78% |
| HQ | 0.10% | 0.10% | 0.10% | 0.10% | 0.09% | 0.09% |
| KS300 | 0.99% | 2.00% | 0.99% | 2.00% | 0.93% | 0.93% |
| ITX | 0.50% | 0.50% | 0.50% | 0.50% | 0.46% | 0.46% |
| BYK 3500 | --- | --- | --- | --- | --- | --- |
| Pigment Dispersion A1 (Cyan) | 49.50% | --- | --- | --- | --- | --- |
| Pigment Dispersion A1 (Magenta) | --- | 30.00% | --- | --- | 15.00% | --- |
| Pigment Dispersion A1 (Yellow) | --- | --- | 49.50% | --- | --- | --- |
| Pigment Dispersion A1 (Black) | --- | --- | --- | 26.00% | --- | 23.13% |
| Total | 100% | 100% | 100% | 100% | 100% | 100% |

Jet operating window for the above ink formulations were determined according to the method described hereinabove, using an Apollo PSKII system and Spectra SE 128 printhead operating at a firing frequency of 16 or 32 kHz. Operating temperature and voltage were varied for selected formulations at each of these firing frequencies. The results are summarized in Table 27b.

Table 27b.

| Temperature | Jetting Performance at 16 kHz, maximum voltage | | | | Jetting Performance at 32 kHz, maximum voltage | | | |
|---|---|---|---|---|---|---|---|---|
| (° C) | 27-1 | 27-2 | 27-3 | 27-4 | 27-1 | 27-5 | 27-6 | 27-3 |
| 30 | 130 | 140 | 130 | 140 | 90 | 110 | 110 | 120 |
| 40 | 140 | 130 | 130 | 130 | 130 | 120 | 110 | 120 |
| 50 | 130 | 120 | 120 | 125 | 120 | 110 | 110 | 110 |
| 60 | 120 | 120 | 120 | 125 | 110 | 100 | 90 | 80 |
| 70 | 130 | 120 | 120 | 120 | 90 | 80 | 110 | 80 |

These data in Table 27b show individual CMYK formulations having polyfunctional ethylenically unsaturated monomers (EB 40) and in the absence of urethane-acrylate (UA) oligomer (CN966H90), Examples 27-1 through 27-4, each of which has an optimal jet operation window at a jetting frequency of 16 kHz. By contrast, at the higher jetting frequency of 32 kHz 27-5 (magenta) and 27-6 (black) each are formulated with UA oligomer in the absence of polyfunctional ethylenically unsaturated monomer. The UA containing formulations each show an optimal jet operation window at a jetting frequency of 32 kHz. The exception to this trend, as seen in the above data, is the yellow inkjet formulation 27-3, prepared using the polyfunctional ethylenically unsaturated monomer EB 40 in the absence of UA oligomer, which exhibited the highest operating voltage of a yellow ink in the temperature range of 30 to 50 °C.

The terms "a" and "an" as used herein do not denote a limitation of quantity, but rather denote the presence of at least one of the referenced item. The endpoints of all ranges directed to the same characteristic or component are inclusive and independently combinable.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

## Claims

1.  A radiation curable inkjet ink, comprising:

    a radiation curable composition comprising

       0.1 to 15 wt.% of an ethylenically unsaturated monofunctional monomer,
       30 to 80 wt.% of an ethylenically unsaturated difunctional monomer,
       2- 12% wt.% of an ethylenically unsaturated polyfunctional monomer, and
       0 to 15 wt.% of an ethylenically unsaturated urethane oligomer;

    a pigment dispersion; and
    a polymerization initiator;
    wherein the ink when containing ethylenically unsaturated urethane oligomer has an activation energy of fluidization of 15 to 26 kJ/mol at a shear rate of 3,500 -170,000 sec$^{-1}$ and a temperature of 25 to 50°C and in the absence of ethylenically unsaturated urethane ologomer has an activation energy of fluidization of 18 to 40kj/mol at a shear rate of 1 to 170,000 sec$^{-1}$ and a temperature of 25 to 50°C

2.  The ink according to claim 1, wherein the ink exhibits Newtonian or near-Newtonian behavior in the absence of a surfactant, and wherein the jet operating window of the ink is not substantially affected by the presence of a surfactant.

3.  The ink according to claim 1, wherein the ink has a static surface tension of 22 to 40 dynes per centimeter, as determined by the method of du Nouy, using a platinum-indium ring tensiometer.

4.  The ink according to claim 1, wherein the ink has a recovery time for reforming a meniscus in the nozzle of the print head of less than the interval between jetting events, and wherein the inkjet printing head used is an impulse inkjet print head operating at a frequency of 16 kHz or greater.

5. The ink according to claim 1, wherein the ink has a viscosity of 5 to 20 cP at 40°C at a shear rate of about 500 sec$^{-1}$,.

6. The ink according to claim 1, wherein the ink is jettable at frequencies of 16 kHz or greater using an impulse print head.

7. The ink according to claim 1, which when used in a impulse inkjet print head operating at a frequency of 16 kHz or greater, has an operating window of reliable printing wherein less than or equal to 9 nozzles of a total of 128 nozzles in the print head fail after three minutes of continuous jetting.

8. The ink according to claim 1, wherein the ink comprises an ethylenically unsaturated tetrafunctional monomer.

9. The ink according to claim 1, wherein anyone of the ethylenically unsaturated monomers contains a ethylenic unsaturated functional group selected from the group consisting of methacrylate, acrylate, vinyl ether, allyl ether, acrylamide, methacrylamide, and combinations thereof.

10. The ink according to claim 1, further comprising a coinitiator, stabilizer, a leveling agent, multifunctional thiol compound, or a combination thereof.

11. The ink according to claim 1, wherein the ink further comprises a non-ionic leveling agent, or an ionic polyacrylate leveling agent present at 0.1 to 1.0 wt% of the total weight of the ink.

12. The ink according to claim 1 provided however, the ink contains no surfactant.

13. The ink according to claim 1, wherein the ink further comprises a silicone surfactant present at 0.01 to 0.25 wt% of the total weight of the ink.

14. An article comprising a cured ink obtained from the radiation curable inkjet ink according to claim 1.


**Patentansprüche**

1. Strahlungshärtbare Tintenstrahldrucktinte, die folgendes umfasst:

   eine strahlungshärtbare Zusammensetzung, die folgendes umfasst:

   0,1 bis 15 Gew.-% eines ethylenisch ungesättigten monofunktionalen Monomers;
   30 bis 80 Gew.-% eines ethylenisch ungesättigten difunktionalen Monomers;
   2 bis 12 Gew.-% eines ethylenisch ungesättigten polyfunktionalen Monomers; und
   0 bis 15 Gew.-% eines ethylenisch ungesättigten Urethanoligomers;

   eine Pigmentdispersion; und
   einen Polymerisationsinitiator;
   wobei die Tinte, wenn sie ethylenisch ungesättigtes Urethanoligomer enthält, eine Aktivierungsenergie der Fluidisierung von 15 bis 26 kJ/mol bei einer Schergeschwindigkeit von 3.500 bis 170.000 Sek$^{-1}$ und einer Temperatur von 25 bis 50 °C aufweist, und wobei sie in Abwesenheit von ethylenisch ungesättigtem Urethanoligomer eine Aktivierungsenergie der Fluidisierung von 18 bis 40 kJ/mol bei einer Schergeschwindigkeit von 1 bis 170.000 Sek$^{-1}$ und einer Temperatur von 25 bis 50 °C aufweist.

2. Tinte nach Anspruch 1, wobei die Tinte in Abwesenheit eines Tensids newtonsches oder nahezu newtonsches Verhalten aufweist, und wobei das Strahlbetriebsfenster der Tinte durch das Vorhandensein eines Tensids nicht wesentlich beeinflusst wird.

3. Tinte nach Anspruch 1, wobei die Tinte eine statische Oberflächenspannung zwischen 22 und 40 Dyn/cm bestimmt nach der Methode von Du Noüy unter Verwendung eins Platin-Iridium-Ring-Tensiometers.

4. Tinte nach Anspruch 1, wobei die Tinte eine Regenerationszeit zur Neubildung eines Wulstrands in der Düse des Druckkopfes von weniger als dem Intervall zwischen Strahlausstoßereignissen aufweist, und wobei der verwendete Tintenstrahldruckkopf ein Impulstintenstrahldruckdruckkopf ist, der mit einer Frequenz von 16 kHz oder höher arbeitet.

**5.** Tinte nach Anspruch 1, wobei die Tinte bei bei 40 °C und einer Schergeschwindigkeit von etwa 500 Sek$^{-1}$ eine Viskosität von etwa 5 bis 20 cP aufweist.

**6.** Tinte nach Anspruch 1, wobei die Tinte unter Verwendung eines Impulsdruckkopfes mit Frequenzen von 16 kHz oder höher strahlausstoßfähig ist.

**7.** Tinte nach Anspruch 1, wobei diese, wenn sie in einem Impulstintenstrahldruckdruckkopf verwendet wird, der mit einer Frequenz von 16 kHz oder höher betrieben wird, ein Betriebsfenster des zuverlässigen Druckens aufweist, wobei weniger oder gleich 9 Düsen von insgesamt 128 Düsen in dem Druckkopf nach drei Minuten des ununterbrochenen Strahlausstoßes ausfallen.

**8.** Tinte nach Anspruch 1, wobei die Tinte ein ethylenisch ungesättigtes tetrafunktionales Monomer umfasst.

**9.** Tinte nach Anspruch 1, wobei jedes beliebige der ethylenisch ungesättigten Monomer eine ethylenisch ungesättigte funktionale Gruppe aufweist, die ausgewählt ist aus der Gruppe bestehend aus Methacrylat, Acrylat, Vinylether, Allylether, Acrylamid, Methacrylamid und Kombinationen daraus.

**10.** Tinte nach Anspruch 1, wobei diese ferner folgendes umfasst: einen Coinitiator, einen Stabilisator, ein Egalisiermittel, eine multifunktionale Thiolverbindung oder eine Kombination daraus.

**11.** Tinte nach Anspruch 1, wobei diese ferner folgendes umfasst: ein nicht ionisches Egalisiermittel oder ein ionisches Polyacrylat-Egalisiermittel, das mit 0,1 bis 1,0 Gew.-% des Gesamtgewichts der Tinte vorhanden ist.

**12.** Tinte nach Anspruch 1, unter der Voraussetzung, dass die Tinte kein Tensid aufweist.

**13.** Tinte nach Anspruch 1, wobei die Tinte ferner ein Silikontensid umfasst, das mit 0,01 bis 0,25 Gew.-% des Gesamtgewichts der Tinte vorhanden ist.

**14.** Artikel, der eine gehärtete Tinte umfasst, die aus der strahlungshärtbaren Tintenstrahldrucktinte nach Anspruch 1 erhalten worden ist.

**Revendications**

**1.** Encre d'imprimante à jet d'encre à séchage par rayonnement, comprenant :

une composition à séchage par rayonnement, comprenant :

de 0,1 à 15 % en poids d'un monomère monofonctionnel éthylénique insaturé,
de 30 à 80 % en poids d'un monomère difonctionnel éthylénique insaturé,
de 2 à 12 % en poids d'un monomère polyfonctionnel éthylénique insaturé, et
de 0 à 15 % en poids d'un oligomère uréthane éthylénique insaturé ;

une dispersion de pigment ; et
un initiateur de polymérisation ;
l'encre, lorsqu'elle contient un oligomère uréthane éthylénique insaturé, ayant une énergie d'activation de fluidification de 15 à 26 kJ/mol à un taux de cisaillement de 3 500 à 170 000 s$^{-1}$ et une température de 25 à 50 °C et, en l'absence d'oligomère uréthane éthylénique insaturé, ayant une énergie d'activation de fluidification de 18 à 40 kJ/mol à un taux de cisaillement de 1 à 170 000 s$^{-1}$ et une température de 25 à 50 °C.

**2.** Encre selon la revendication 1, l'encre présentant un comportement newtonien ou quasi newtonien en l'absence d'un agent tensioactif, et la fenêtre opérationnelle de jet de l'encre n'étant pas sensiblement affectée par la présence d'un agent tensioactif.

**3.** Encre selon la revendication 1, l'encre ayant une tension superficielle statique de 22 à 40 dynes par centimètre, comme déterminé par la méthode de du Nouy, à l'aide d'un tensiomètre à anneau de platine-iridium.

**4.** Encre selon la revendication 1, l'encre ayant un temps de récupération pour reformer un ménisque dans la buse de la tête d'impression inférieur à l'intervalle entre les événements de jet, et la tête d'impression à jet d'encre utilisée étant une tête d'impression à jet d'encre à impulsions fonctionnant à une fréquence de 16 kHz ou plus.

**5.** Encre selon la revendication 1, l'encre ayant une viscosité de 5 à 20 cP à 40 °C à un taux de cisaillement d'environ 500 s$^{-1}$.

**6.** Encre selon la revendication 1, l'encre étant pulvérisable à des fréquences de 16 kHz ou plus à l'aide d'une tête d'impression à impulsions.

**7.** Encre selon la revendication 1, qui lorsqu'elle est utilisée dans une tête d'impression à jet d'encre à impulsions fonctionnant à une fréquence de 16 kHz ou plus, dispose d'une fenêtre opérationnelle d'impression fiable, 9 buses ou moins sur un total de 1.28 buses dans la tête d'impression subissant une défaillance après trois minutes de jet continu.

**8.** Encre selon la revendication 1, l'encre comprenant un monomère tétrafonctionnel éthylénique insaturé.

**9.** Encre selon la revendication 1, l'un quelconque des monomères éthyléniques insaturés contenant un groupe fonctionnel éthylénique insaturé choisi dans le groupe constitué par du méthacrylate, acrylate, éther vinylique, éther allylique, acrylamide, méthacrylamide et leurs combinaisons.

**10.** Encre selon la revendication 1, comprenant en outre un co-initiateur, un stabilisateur, un agent égalisant, un composé thiol multifonctionnel, ou leurs combinaisons.

**11.** Encre selon la revendication 1, l'encre comprenant en outre un agent égalisant non ionique, ou un agent égalisant polyacrylate ionique représentant de 0,1 à 1,0 % en poids du poids total de l'encre.

**12.** Encre selon la revendication 1 sous réserve, toutefois, que l'encre ne contient aucun agent tensio-actif.

**13.** Encre selon la revendication 1, l'encre comprenant en outre un tensioactif silicone représentant de 0,01 à 0,25 % en poids du poids total de l'encre.

**14.** Article comprenant une encre séchée obtenue à partir de l'encre d'imprimante à jet d'encre à séchage par rayonnement selon la revendication 1.

Figure 1 Operating window of Example 1, a radiation curable cyan ink

Figure 2 Operating window of a radiation curable yellow ink

Figure 3 Operating window of a radiation curable black ink

Figure 4 Photographs of cyan ink droplet break up of Example 1 as the ink drop is ejected from the faceplate

Figure 5.

Figure 6. Temperature-Viscosity Curves of Cyan Inks

Figure 7. Arrhenius Curves of Cyan Inks

Figure 8.

NO URETHANE
200 X

Figure 9.

NO URETHANE
400 X

Figure 10.

Figure 11.

5% URETHANE
400X

Figure 12.

7.5% URETHANE
200X

Figure 13.

7.5% URETHANE
400X

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3445419 A
- US 4284539 A
- US 4289867 A
- US 3661744 A